# EUROPÄISCHE PATENTSCHRIFT

(11) **EP 2 283 456 B1**
(45) Veröffentlichungstag und Bekanntmachung des Hinweises auf die Patenterteilung: **14.01.2015**
(21) Anmeldenummer: 09749853.9
(22) Anmeldetag: 19.05.2009
(51) Int. Cl.: G06Q 10/08

(54) **VERFAHREN UND VORRICHTUNG ZUM KENNZEICHNEN VON OBJEKTEN**
METHOD AND DEVICE FOR IDENTIFYING OBJECTS
PROCÉDÉ ET DISPOSITIF POUR IDENTIFIER DES OBJETS

(30) Priorität: 20.05.2008 DE 102008001880
(43) Veröffentlichungstag der Anmeldung: 16.02.2011
(73) Patentinhaber: SecureCode LTD, 91083 Baiersdorf (DE)
(72) Erfinder: KAULARTZ, Markus, 80797 München (DE); REISER, Oliver, 93059 Regensburg (DE); ZICH, Michael, 91099 Poxdorf (DE); BAUER, Simon, 95445 Bayreuth (DE); KOBSDAJ, Daniel, 91099 Poxdorf (DE)
(74) Vertreter: Betten & Resch
(86) Internationale Anmeldenummer: PCT/EP2009/056101
(87) Internationale Veröffentlichungsnummer: WO 2009/141363

(56) Entgegenhaltungen:
- EP-A- 0 889 448
- US-A1- 2006 053 025

## Beschreibung

Die vorliegende Erfindung betrifft ein Verfahren und eine Vorrichtung zur Kennzeichnung von Objekten und zur Überprüfung der Authentizität der gekennzeichneten Objekte und insbesondere zur fälschungssicheren Kennzeichnung von Arzneimitteln und/oder Medikamenten sowie zur Überprüfung der Kennzeichnung durch einen Verbraucher.

Zur Kennzeichnung von Waren, wie zum Beispiel Medikamenten, Kleidungsstücken, Tonträgern oder dergleichen, sind verschiedene Verfahren entwickelt worden, um Herstellern, Händlern, Zollbehörden, Verbrauchern etc. die Möglichkeit zu geben, die Authentizität der Waren zu überprüfen. Durch diese Verfahren soll beispielsweise der Verbraucher in die Lage versetzt werden, die Authentizität der erworbenen Waren zu überprüfen, um sich somit vor Plagiaten besonders vor gefälschten Arzneimitteln und/oder Medikamenten, die möglicherweise nicht die erwünschte oder sogar schädigende Wirkungen aufweisen, zu schützen.

In der DE 43 41 880 A1 wird hierzu ein Kontrollsystem für Objekte mit Datenträgern, auf denen Daten als Identifikationscode speicherbar sind, und mit externen Geräten zur Datenerfassung und zur rechnergestützten Datenverarbeitung beschrieben, welches zum Schutz vor unerlaubter Nachahmung und Nachbildung von Artikeln einsetzbar ist. Das Kontrollsystem überprüft herstellerspezifische Daten, die als Identifikationscode auf dem Datenträger, wie zum Beispiel einem RFID-Chip, gespeichert sind. Der Datenträger ist an dem zu schützenden Artikel angebracht. Solche bekannten RFID-Chips sind jedoch nicht fälschungssicher, da eine Fälschung oder Nachbildung von entsprechenden Datenträgern sowie eine Umprogrammierung oder Zerstörung des Datenträgers durch bekannte Methoden möglich ist. Die Manipulierbarkeit der Datenträger schränkt die Zuverlässigkeit eines entsprechenden Kontrollsystems erheblich ein. Des Weiteren ist zur Überprüfung der Authentizität des Identifikationscodes ein spezielles Gerät erforderlich, mit welchem der Datenträger gelesen wird. Diese Geräte sind auf Grund der Vielfältigkeit der verschiedenen Datenträger und Objekte insbesondere beim Verbraucher regelmäßig nicht vorhanden, so dass eine einfache und sichere Überprüfung von Artikeln gerade für den Verbraucher nicht gegeben ist.

in der EP 0 889 448 B1 wird ein Verfahren beschrieben, bei weichem die Objekte mit einem Etikett versehen werden, auf welchem ein nichtreproduzierbares Muster aufgebracht ist. Das nichtreproduzierbare Muster wird dabei aus der Beschreibung des Objektes erzeugt. Die Überprüfung des Etiketts wird bei diesem Verfahren durch Abtasten mit einem speziellen Gerät vorgenommen. Entsprechende Geräte sind jedoch bei den Verbrauchern vor Ort nicht vorhanden und die Überprüfbarkeit der Etiketten ist aus diesem Grund gerade für Verbraucher nicht gegeben. Des Weiteren sind solche speziellen Geräte zur Überprüfung nicht einfach zu bedienen, so dass unvermeidlich Fehler bei der Überprüfung durch ungeübte Personen, wie den Verbraucher, auftreten, welche die Zuverlässigkeit des entsprechenden Verfahrens weiter beeinträchtigen.

In US 2006/0053025 A1 ist ein Verfahren zum Kennzeichnen und Authentisieren eines Produkts zum Zwecke der Fälschungserkennung beschrieben. Dieses Verfahren umfasst insbesondere die Verfahrensschritte: Erzeugen von auf das Produkt bezogenen Original-Identifikationsdaten, Verschlüsseln dieser Original-Identifikationsdaten, um daraus verschlüsselte Identifikationsdaten zu erzeugen, Speichern der Original-Identifikationsdaten und der dazugehörigen verschlüsselten Identifikationsdaten in einem Datenbanksystem und Kennzeichnen des Produkts mit den verschlüsselten Identifikationsdaten, während es verpackt wird.

Der Erfindung liegt somit die Aufgabe zugrunde, ein Verfahren und eine Vorrichtung zum Kennzeichnen von Objekten und zur Überprüfung der Authentizität entsprechend gekennzeichneter Objekte vorzuschlagen, das eine sehr hohe Sicherheit und einfache Bedienbarkeit bietet.

Erfindungsgemäß wird diese Aufgabe durch ein Verfahren zum Kennzeichnen eines Objekts gemäß Anspruch 1, einem Verfahren zum Überprüfen der Authentizität eines Objekts gemäß Anspruch 4, einer Vorrichtung zum Kennzeichnen eines Objekts gemäß Anspruch 7 und einer Vorrichtung zum Überprüfen der Authentizität eines Objekts gemäß Anspruch 9 gelöst. Ausführungsformen der vorliegenden Erfindung werden in den abhängigen Ansprüchen definiert.

Ein Verfahren zum Kennzeichnen eines Objektes, das zumindest eine Objektkennzeichnung aufweist, mit einem Objekt-Code, der zur Überprüfung der Authentizität des Objektes verwendet wird, weist die Schritte auf: Erzeugen eines eindeutigen zufälligen System-Codes, der aus einem ersten und einem zweiten System-Codeteil besteht, wobei der erste System-Codeteil aus einem ersten Zeichenvorrat durch ein erstes Zufallsverfahren und der zweite System-Codeteil aus einem zweiten Zeichenvorrat durch ein zweites Zufalisverfahren erzeugt werden, und Speichern des System-Codes zusammen mit mindestens einer ersten objektspezifischen Information in einem ersten Datenspeicher, wobei der erste System-Codeteil durch ein erstes Verschlüsselungsverfahren und der zweite System-Codeteil durch ein zweites Verschlüsselungsverfahren vor dem Speichern verschlüsselt werden; Erzeugen eines zufälligen Verschlüsselungsschlüssels aus einem dritten Zeichenvorrat durch ein drittes Zufallsverfahren, Erzeugen einer eindeutigen Zuordnungskennung durch ein Zuordnungsverfahren, und Speichern des Verschlüsselungsschlüssels, der Zuordnungskennung und zumindest einer zweiten objektspezifischen Information in einem zweiten Datenspeicher; Erzeugen des Objekt-Codes, der zumindest aus dem ersten System-Codeteil und der Zuordnungskennung besteht, Verschlüsseln des System-Codes durch ein drittes Verschlüsselungsverfahren, Verschlüsseln der Objektkennzeichnung durch ein viertes Verschlüsselungsverfahren, und Speichern des verschlüsselten System-Codes zusammen mit der verschlüsselten Objektkennzeichnung in einem dritten Datenspeicher; und Anbringen des Objekt-Codes an dem Objekt.

Gemäß einem Aspekt der vorliegenden Erfindung wird vorgeschlagen, dass das Verfahren weiterhin umfasst, dass zum gespeicherten System-Code zusätzlich eine Aktivierungsinformation im ersten Datenspeicher gespeichert wird, die kennzeichnet, ob der System-Code aktiv oder nicht-aktiv ist, wobei der System-Code erst nach einer Aktivierung überprüfbar ist. Die Sicherheit der Kennzeichnung des Objektes wird dadurch weiter vorteilhaft verbessert, da die Kennzeichnung des Objektes erst vor dem Verkauf des Objektes an den Verbraucher aktiviert wird und damit eine unsichere Lieferkette vom Produzenten zum Verbraucher überbrückt wird.

Gemäß einem weiteren Aspekt der vorliegenden Erfindung wird vorgeschlagen, dass der Objekt-Code in einen ersten und einen zweiten Objekt-Codeteil aufgeteilt wird. Weiterhin wird vorgeschlagen, dass der zweite Objekt-Codeteil so an dem Objekt angebracht wird, dass er von außen nicht einsehbar ist, und der erste Objekt-Codeteil außen auf dem Objekt angebracht wird. Es wird dabei vorgeschlagen, dass der erste Objekt-Codeteil unter einem Sichtschutz angebracht wird. Dadurch kann die Sicherheit und Zuverlässigkeit der Kennzeichnung des Objektes zweckmäßigerweise weiter erhöht werden.

Ein Verfahren zum Überprüfen der Authentizität eines Objektes mit einem Objekt-Code, welches zumindest eine Objektkennzeichnung aufweist, die mit einem der vorgeschlagenen Verfahren zur Kennzeichnung von Objekten gemäß der vorliegenden Erfindung gekennzeichnet ist, weist die Schritte auf: Übertragen des Objekt-Codes über ein Übertragungsmittel und Empfangen des übertragenen Objekt-Codes durch eine Überprüfungseinrichtung, Aufteilen des Objekt-Codes in zumindest einen ersten System-Codeteil und eine Zuordnungskennung, Verschlüsseln des ersten System-Codeteiles mit einem ersten Verschlüsselungsverfahren, Vergleichen des verschlüsselten ersten System-Codeteiles mit den ersten System-Codeteilen, die im ersten Datenspeicher gespeichert sind, und, falls der verschlüsselte erste System-Codeteil im ersten Datenspeicher aufgefunden wird, Entschlüsseln eines im ersten Datenspeicher gespeicherten zweiten System-Codeteiles mit einem zweiten Verschlüsselungsverfahren, Zusammenfügen des ersten und des zweiten System-Codeteiles zu einem System-Code, Vergleichen der Zuordnungskennung mit Zuordnungskennungen, die im zweiten Datenspeicher gespeichert sind, und, falls eine übereinstimmende Zuordnungskennung aufgefunden wird, Verschlüsseln des System-Codes durch ein drittes Verschlüsselungsverfahren, Vergleichen des verschlüsselten System-Codes mit verschlüsselten System-Codes, die im dritten Datenspeicher gespeichert sind, und, falls ein übereinstimmender verschlüsselter System-Code aufgefunden wird, Entschlüsseln einer zugeordneten verschlüsselten Objektkennzeichnung durch ein viertes Verschlüsselungsverfahren, und Anzeigen einer entschlüsselten Objektkennzeichnung zum Verglichen der angezeigten Objektkennzeichnung mit der Objektkennzeichnung auf dem Objekt. Das Verfahren erlaubt somit eine besonders einfache und zuverlässige Überprüfung der Kennzeichnung.

Gemäß einem weiteren Aspekt des vorgenannten Verfahrens wird vorgeschlagen, dass das Verfahren, in dem der System-Code im ersten Datenspeicher mit einer zusätzlichen Aktivierungsinformation gespeichert ist, die anzeigt, ob der System-Code aktiv oder nicht-aktiv ist, einen Schritt aufweist, in dem die Aktivierungsinformation von einem der System-Codes aktiviert wird. Dieser Aspekt des Verfahrens ist besonders zweckmäßig, um die unsichere Lieferkette zwischen Produzenten und Verbraucher zu schließen.

Gemäß weiteren Aspekten der Erfindung ist das Übertragungsmittel das Internet oder ein Mobilfunknetz. Darüber hinaus werden abfragespezifische Daten, die bei der Überprüfung des Objekt-Codes erzeugt werden, in einem vierten Datenspeicher abgelegt. Abhängig vom jeweiligen Übertragungsmittel wird hierbei zweckmäßigerweise vorgeschlagen, dass die abfragespezifischen Daten bei Eingabe des Codes per Internet zumindest eine Zeitangabe, die IP-Adresse, den Internet-Dienstanbieter und die Anzahl an Eingabeversuchen sowie bei Eingabe des Codes per SMS zumindest eine Zeitangabe, die Handynummer und die SMS-Wahlnummer umfassen. Dies ist vorteilhaft, da die vorgeschlagenen Übertragungsmittel weit verbreitet und damit für fast jeden Verbraucher zugänglich sind. Das Speichern von abfragespezifischen Daten ist weiterhin vorteilhaft, um beispielsweise zu überprüfen, wann, wie und durch wen ein Objekt-Code erstmalig überprüft wurde.

Eine Vorrichtung zum Kennzeichnen eines Objektes mit einem Objekt-Code und eine Vorrichtung zum Überprüfen eines Objekt-Codes eines Objekt weisen Einrichtungen auf, welche dazu ausgelegt sind, die Schritte der Verfahren der vorliegenden Erfindung auszuführen. Weiterhin schlägt die vorliegende Erfindung ein Computerprogramm, welches, wenn es auf einem Computer abläuft, diesen steuert, das Verfahren gemäß der vorliegenden Erfindung auszuführen, sowie einen Datenträger vor, auf welchem das Computerprogramm abgespeichert ist.

In einem weiteren Aspekt der vorliegenden Erfindung wird ein Objekt vorgeschlagen, welches mit einem Objekt-Code gekennzeichnet ist, der mit dem erfindungsgemäßen Verfahren erzeugt wurde.

Bevorzugte Ausführungsformen der Erfindung werden nachfolgend rein beispielhaft und ohne jegliche Beschränkung anhand der beigefügten Zeichnungen erläutert, in denen:
Fig. 1 ein Ablaufdiagramm einer Ausführungsform des erfindungsgemäßen Verfahrens ist;
Fig. 2 eine detaillierte Ablaufdarstellung zur Erzeugung des System-Codes eines Ausführungsbeispiels der Ausführungsform gemäß Fig. 1 ist;
Fig. 3 eine detaillierte Ablaufdarstellung zur Erzeugung der Verschlüsselungsschlüssel gemäß eines Ausführungsbeispiels der Ausführungsform gemäß Fig. 1 zeigt;
Fig. 4 eine detaillierte Ablaufdarstellung zur Erzeugung des Objekt-Codes gemäß einem Ausführungsbeispiel der Ausführungsform gemäß Fig. 1 zeigt;
Fig. 5A ein Objekt mit einem unter einem Sichtschutz außen angebrachten ersten Objekt-Codeteil und einen von außen nicht einsehbaren zweiten Objekt-Codeteil zeigt;
Fig. 5B das Objekt gemäß Fig. 5A zeigt, bei dem der Sichtschutz vom ersten Objekt-Codeteil entfernt wurde und der zweite Objekt-Codeteil durch Öffnen des Objektes einsehbar ist;
Fig. 5C einen schematischen Ablauf einer Überprüfung des Objekt-Codes des Objektes gemäß Fig. 5B durch einen Verbraucher unter Verwendung des Verfahrens gemäß Fig. 1 zeigt;
Fig. 6 eine schematische Darstellung einer Ausführungsform der Vorrichtung zum Kennzeichnen von Objekten zeigt; und
Fig. 7 eine schematische Darstellung einer Ausführungsform der Vorrichtung zum Überprüfung eines Objekt-Codes zeigt.

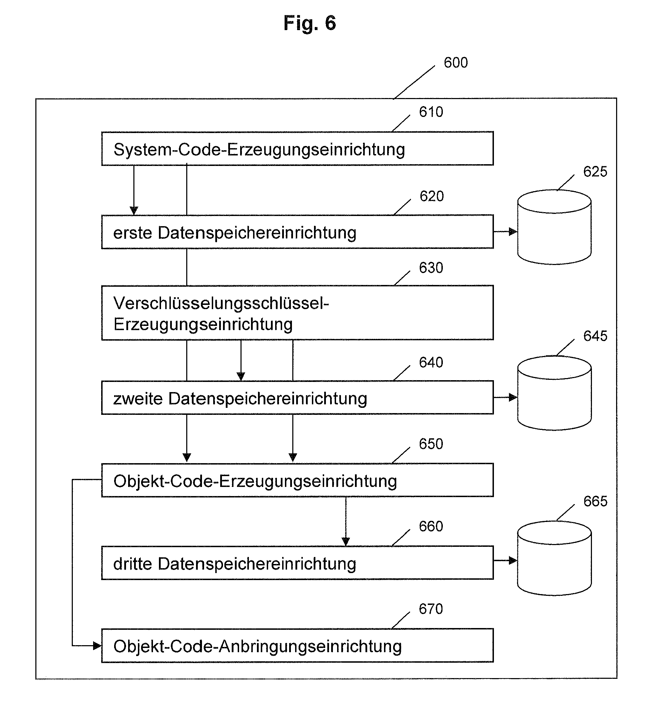

Ein Ausführungsbeispiel einer Vorrichtung zum Kennzeichnen eines Objektes ist in Fig. 6 dargestellt. Die Vorrichtung 600 umfasst eine System-Code-Erzeugungseinrichtung 610, die einen eindeutigen zufälligen System-Code erzeugt und diesen an eine erste Datenspeichereinrichtung 620 zur Speicherung in einem Datenspeicher 625 übergibt, eine Verschlüsselungsschlüssel-Erzeugungseinrichtung 630, die einen zufälligen Verschlüsselungsschlüssel erzeugt und diesen an eine zweite Datenspeichereinrichtung 640 zur Speicherung in einem Datenspeicher 645 übergibt, eine Objekt-Code-Erzeugungseinrichtung 650, die einen Objekt-Code erzeugt und an eine dritte Datenspeichereinrichtung 660 zur Speicherung in einem Datenspeicher 665 übergibt, und eine Objekt-Code-Anbringungseinrichtung 670, die den von der Objekt-Code-Erzeugungseinrichtung 650 erzeugten Objekt-Code an einem Objekt anbringt. Der von der System-Code-Erzeugungseinrichtung 610 erzeugte System-Code und der von der Verschlüsselungsschlüssel-Erzeugungseinrichtung 630 erzeugte Verschlüsselungsschlüssel wird ferner an die Objekt-Code-Erzeugungseinrichtung 650 übergeben.

Vorzugsweise sind die Datenspeichereinrichtungen 620, 640 und 660 und die Datenspeicher 625, 645 und 665 zur Verbesserung der Sicherheit physisch getrennt ausgeführt, in einem vereinfachten Ausführungsbeispiel sind die Datenspeicher 625, 645 und 665 auch in die entsprechenden Datenspeichereinrichtungen 620, 640 und 660 integriert. Weiterhin sind die Datenspeicher 625, 645 und 665 vorzugsweise als physisch getrennte Datenspeicher ausgeführt, um ein Höchstmaß an Sicherheit zu gewährleisten. In einem nicht zur Erfindung gehörigen Ausführungsbeispiel sind zur Vereinfachung der Vorrichtung 600 die Datenspeicher 625, 645 und 665 gemeinsam in einem Datenspeicher zusammengefasst. Es ist für den Fachmann selbstverständlich, dass auch je zwei der Datenspeicher in einem Datenspeicher zusammengefasst werden und ein zusätzlicher separater Datenspeicher für den dritten der Datenspeicher Verwendung finden kann.

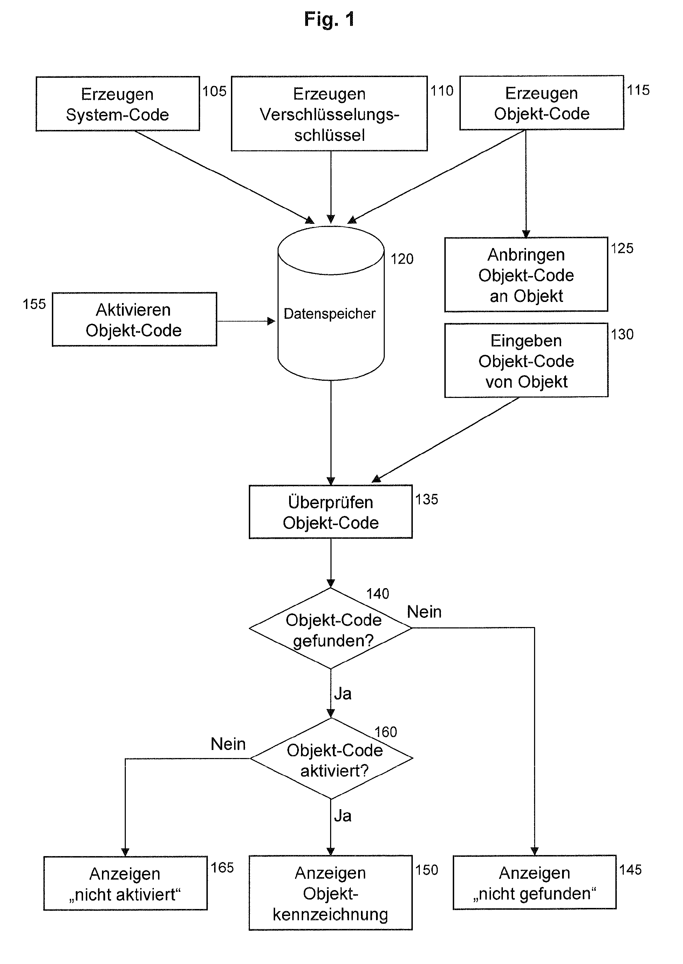

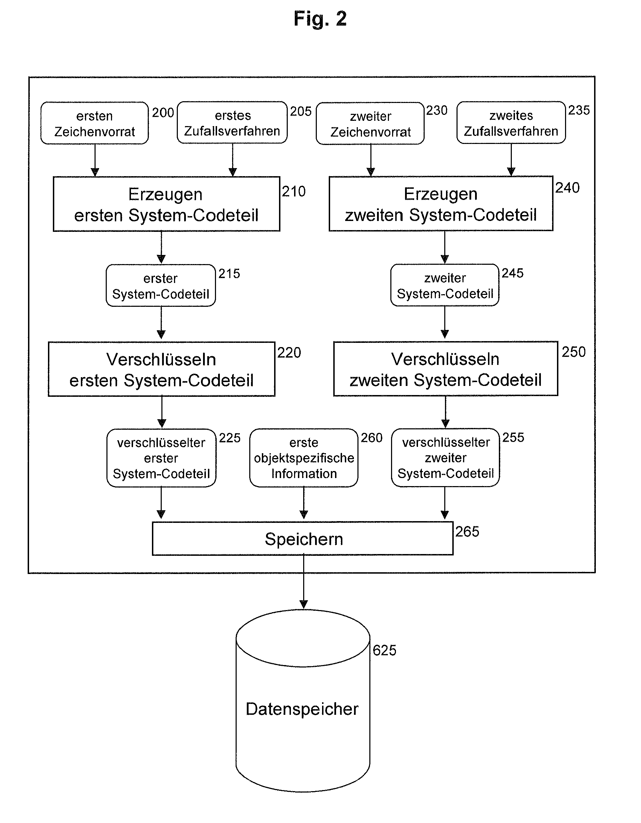

Im Ausführungsbeispiel eines Verfahrens gemäß der Fig. 1 wird in Schritt 105 der System-Code, in Schritt 110 der Verschlüsselungsschlüssel und in Schritt 115 der Objekt-Code erzeugt. Die Ausführungsbeispiele in den Fig. 2, 3 und 4 zeigen jeweils die Erzeugung der einzelnen Codes oder Schlüssel im Detail. In Fig. 1 sind die Datenspeicher 625, 645 und 665 vereinfachend als Datenspeicher 120 dargestellt.

Die Erzeugung des System-Codes ist detailliert in Fig. 2 dargestellt. Beispielhaft wird hier die Erzeugung eines System-Codes mit einer Länge von 128 Zeichen beschrieben, wobei der System-Code aus einem ersten System-Codeteil 215, der die ersten zehn Zeichen des System-Codes umfasst, und einem zweiten System-Codeteil 245, der die übrigen 118 Zeichen des System-Codes umfasst, gebildet. Es ist für den Fachmann selbstverständlich, dass andere beliebig lange Zeichenlängen, wie zum Beispiel 64, 256, 512 Zeichen, für den System-Code und für die jeweiligen System-Codeteile 215, 245 in geeigneter Weise einsetzbar sind. Durch die System-Code-Erzeugungseinrichtung 610 wird aus einem ersten Zeichenvorrat 200 durch Anwendung eines ersten Zufallsverfahrens 205 der erste System-Codeteil 215 mit einer Länge von zehn Zeichen erzeugt. Der erste Zeichenvorrat 200 umfasst dabei beispielsweise eine Anzahl von Zeichen, die aus einem gesamten Zeichenvorrat ausgewählt werden, welcher dem Verfahren oder der Vorrichtung zur Verfügung steht. In der hier beschriebenen Ausführungsform umfasst der gesamte Zeichenvorrat die Großbuchstaben A bis Z und die Ziffern 0 bis 9 aber keine Sonderzeichen. Der erste Zeichenvorrat 200 wird in diesem Ausführungsbeispiel um Zeichen und Ziffern wie beispielsweise Z und 2 vermindert, um die Eindeutigkeit des ersten System-Codeteiles 215 zu gewährleisten. Das erste Zufallsverfahren 205 ist ein beliebiges aus dem Stand der Technik bekanntes Verfahren, bei welchem aus einem vorgegebenen Zeichenvorrat eine Anzahl von Zeichen zufällig, d.h. nicht vorhersagbar, ausgewählt wird. Beispielhaft wird hier durch die System-Code-Erzeugungseinrichtung 610 die Zeichenfolge "F37E4A1BD8" als erster System-Codeteil 215 erzeugt. Dieser erste System-Codeteil 215 wird in Schritt 220 durch Anwendung eines dem Stand der Technik bekannten Verschlüsselungsverfahrens in einen verschlüsselten ersten System-Codeteil 225 verschlüsselt. Vorzugsweise wird in diesem Ausführungsbeispiel eine kryptographische Hash-Funktion, wie zum Beispiel der Message-Digest Algorithmus 5 (kurz: MD5) oder der sichere Hash-Algorithmus (kurz: SHA), als Verschlüsselungsverfahren verwendet.

Weiterhin erzeugt die System-Code-Erzeugungseinrichtung 610 in Schritt 240 einen zweiten System-Codeteil 245 aus einem zweiten Zeichenvorrat 230 mittels eines zweiten Zufallsverfahrens 235. Der zweite Zeichenvorrat 230 umfasst vorzugsweise den oben beschriebenen gesamten Zeichenvorrat. Das zweite Zufallsverfahren 235 ist ebenso ein beliebiges Zufallsverfahren mit den gleichen Eigenschaften, wie sie bereits oben beschrieben wurden, vorzugsweise ist das zweite Zufallsverfahren 235 identisch mit dem ersten Zufallsverfahren 205. Der so erzeugte zweite System-Codeteil 245 mit einer Länge von 118 Zeichen wird durch ein zweites Verschlüsselungsverfahren in Schritt 250 verschlüsselt. Vorzugsweise wird in diesem Ausführungsbeispiel ein symmetrisches Verschlüsselungsverfahren, wie zum Beispiel der Advanced Encryption Standard (kurz: AES) oder der Data Encryption Standard (kurz: DES), angewendet, welches den ersten System-Codeteil 215 als Schlüssel für die Verschlüsselung verwendet. Das Ergebnis des Schritts 250 ist ein verschlüsselter zweiter System-Codeteil 255.

Der verschlüsselte erste System-Codeteil 225 und der verschlüsselte zweite System-Codeteil 255 werden in Schritt 265 zusammen mit einer ersten objektspezifischen Information 260 durch die erste Datenspeichereinrichtung 620 in den Datenspeicher 625 so gespeichert, dass der verschlüsselte erste System-Codeteil 225, der verschlüsselte zweiten System-Codeteil 255 und die erste objektspezifische Information 260 einander zugeordnet sind. Die erste objektspezifische Information 260 umfasst in diesem Ausführungsbeispiel vorzugsweise eine Produktionseinheitsnummer, die eine Anzahl von Objekten aus einer Produktion identifiziert, und das aktuelle Datum.

Der erste System-Codeteil 215 und der zweite System-Codeteil 245 bilden, wenn beide System-Codeteile miteinander kombiniert werden, den System-Code. Gemäß der in Fig. 2 dargestellten Ausführungsform wird der System-Code nicht derart gebildet, dass er zur Verwendung in weiteren Schritten des Verfahrens zur Verfügung steht, sondern der System-Code wird jeweils in einem einzelnen Schritt, in dem er benötigt wird, durch Kombination des ersten 215 mit dem zweiten System-Codeteil 245 für diesen einzelnen Schritt gebildet. Die Kombination ist hierbei eine Aneinanderreihung des ersten und des zweiten System-Codeteils zu einem System-Code entsprechender Länge. Es ist für den Fachmann selbstverständlich, dass der System-Code durch einen entsprechenden zusätzlichen Schritt zur Verwendung im weiteren Verfahren als solcher bereitgehalten werden kann.

Weiterhin wird in einem Ausführungsbeispiel zusätzlich eine Aktivierungsinformation, nicht in Fig. 2 gezeigt, durch die Datenspeichereinrichtung 620 im Datenspeicher 120 gespeichert, die zugeordnet zu einem verschlüsselten ersten System-Codeteil 215 angibt, ob dieser gesperrt oder frei ist. Diese Aktivierungsinformation muss vor dem Überprüfen eines Objekt-Codes durch einen Aktivierungsschritt, der weiter unten näher beschrieben ist, aktiviert werden, um den Objekt-Code überprüfen zu können.

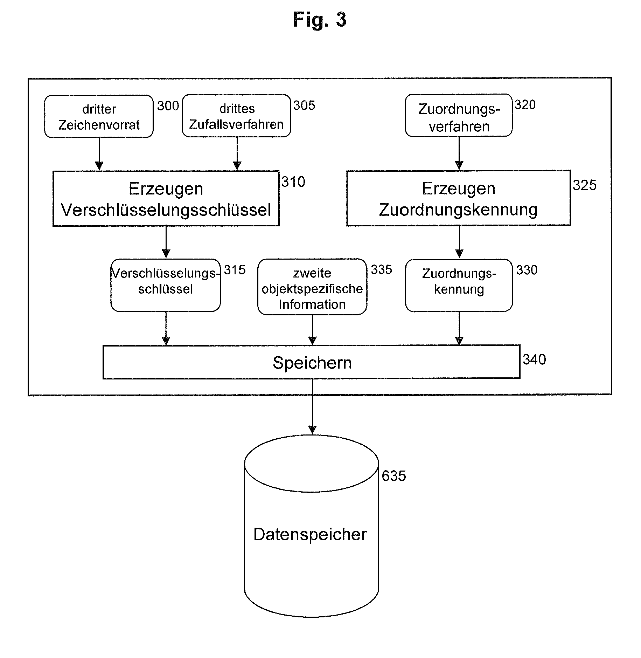

Das Verfahren aus Fig. 1 erzeugt in einem weiteren Schritt 110 einen Verschlüsselungsschlüssel 315 und eine Zuordnungskennung 330. Die Erzeugung des Verschlüsselungsschlüssels 315 und der Zuordnungskennung 330 ist detailliert in Fig. 3 gemäß einem Ausführungsbeispiel dargestellt. Der Verschlüsselungsschlüssel 315 wird in Schritt 310 durch die Verschlüsselungsschlüssel-Erzeugungseinrichtung 630 durch Anwendung eines dritten Zufallsverfahrens 305 aus einem dritten Zeichenvorrat 300 erzeugt. Der dritte Zeichenvorrat 300 umfasst beispielsweise den gesamten oben beschriebenen Zeichenvorrat und zusätzlich noch alle Kleinbuchstaben und Sonderzeichen. Das dritte Zufallsverfahren 305 ist zweckmäßigerweise identisch mit dem ersten Zufallsverfahren 205 und dem zweiten Zufallsverfahren 235, wobei andere bekannte Zufallsverfahren auch einsetzbar sind. Der Verschlüsselungsschlüssel 315 hat vorzugsweise eine Zeichenlänge zwischen 200 und 500 Zeichen und ist variabel, d.h. die Zeichenlänge verändert sich in vorbestimmten Zeitabständen. Der Verschlüsselungsschlüssel hat in dem hier bevorzugten Ausführungsbeispiel eine Länge von 256 Zeichen.

Weiterhin wird in Schritt 325 durch Anwendung eines festgelegten Zuordnungsverfahrens 320 eine Zuordnungskennung 330 erzeugt. Ein bevorzugtes Zuordnungsverfahren 320 berechnet beispielweise die Anzahl der Tage, die zwischen einem Referenzdatum und dem Verschlüsselungstag liegen, und gibt diese als die Zuordnungskennung 330 aus. Ferner ist eine Verschlüsselung der Zuordnungskennung 330 durch das Zuordnungsverfahren 320 möglich. In dem hier bevorzugten Ausführungsbeispiel wird die Zuordnungskennung 330 durch Anwendung eines einfachen Chiffrierverfahrens, bei dem jedes einzelne Zeichen codiert wird, verschlüsselt. Liegen beispielsweise zwischen dem Referenzdatum und dem Verschlüsselungstag 121 Tage, wird die Anzahl der Tage durch das Zuordnungsverfahren 320 zuerst in zwei Teile, wie zum Beispiel 1 als erster Teil und 21 als zweiter Teil, aufgeteilt. Danach werden der erste und der zweite Teil durch Anwendung einer Umwandlungsvorschrift, wie zum Beispiel 1=A, 2=B, 3=C, ..., 21=U, ..., 26=Z, 27=A, ..., 52=Z, 53=A usw., in die Buchstaben "A" für den ersten Teil und "U" für den zweiten Teil umgewandelt, wodurch sich durch Zusammenfügen des ersten und zweiten Teiles die Buchstabenkombination "AU" als Zuordnungskennung 330 ergibt.

In Schritt 340 werden der Verschlüsselungsschlüssel 315 und die Zuordnungskennung 330 zusammen mit einer zweiten objektspezifischen Information 335 durch die zweite Datenspeichereinrichtung 640 in den Datenspeicher 120 gespeichert. Die zweite objektspezifische Information 335 umfasst dabei vorzugsweise die Produktionseinheitsnummer und das aktuelle Datum.

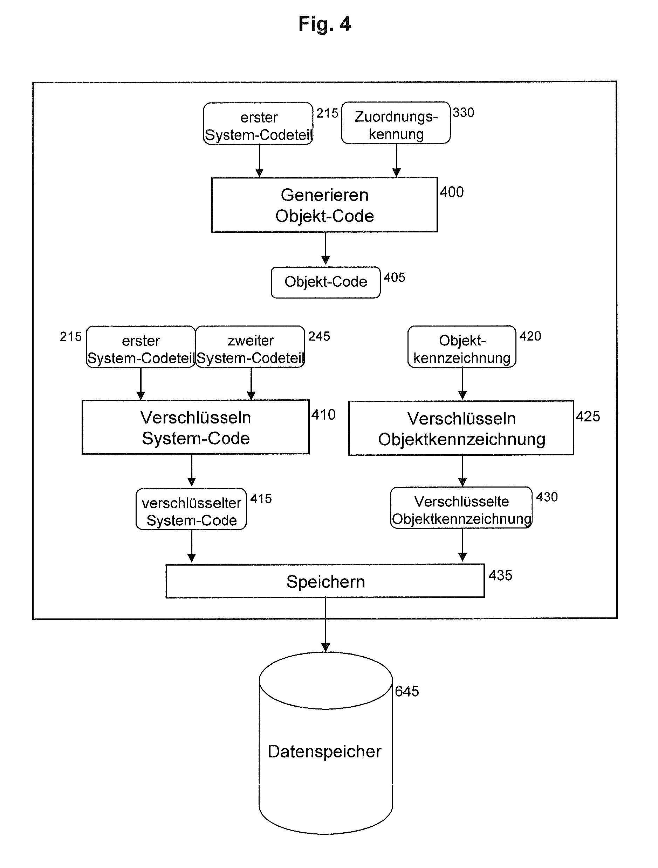

Die Erzeugung des Objekt-Codes 405 erfolgt in Schritt 115 in Fig. 1, welche gemäß einem Ausführungsbeispiel in Fig. 4 detailliert dargestellt ist. In Schritt 400 wird durch die Objekt-Code-Erzeugungseinrichtung 650 ein Objekt-Code 405 erzeugt, der zumindest aus dem ersten System-Codeteil 215 und der Zuordnungskennung 330 besteht. Vorzugsweise werden der erste System-Codeteil 215 und die Zuordnungskennung 330 zusammengefügt, wobei sich im hier beschriebenen Beispiel aus dem oben beschriebenen ersten System-Codeteil 215 mit zehn Zeichen und der Zuordnungskennung 330 mit zwei Zeichen der Objekt-Code 405 "F37E4A1BD8AU" mit 12 Zeichen ergibt.

Weiterhin wird durch die Objekt-Code-Erzeugungseinrichtung 650 der System-Code, der aus dem ersten System-Codeteil 215 und dem zweiten System-Codeteil 245 besteht, in Schritt 410 durch ein drittes Verschlüsselungsverfahren in einen verschlüsselten System-Code 415 verschlüsselt. Das dritte Verschlüsselungsverfahren ist ein dem Stand der Technik bekanntes Verschlüsselungsverfahren vorzugsweise ein asymmetrisches Verschlüsselungsverfahren, wie zum Beispiel den RSA-Algorithmus, welches den Verschlüsselungsschlüssel 315 als Schlüssel verwendet. Das asymmetrische Verschlüsselungsverfahren wird in der hier beschriebenen Ausführungsform nicht als klassisches Public-Key-Verfahren sondern als eine Einwegverschlüsselung verwendet, da das Verfahren den Verschlüsselungsschlüssel 315 als öffentlichen Schlüssel verwendet ohne einen weiteren Schlüssel als privater Schlüssel zum Entschlüsseln bereitzustellen.

Die Objekt-Code-Erzeugungseinrichtung 650 verschlüsselt weiterhin in Schritt 425 eine Objektkennzeichnung 420 durch ein viertes Verschlüsselungsverfahren. Das vierte Verschlüsselungsverfahren ist ein beliebiges bekanntes Verschlüsselungsverfahren, beispielhaft wird hier ein symmetrisches Verschlüsselungsverfahren, wie zum Beispiel der Advanced Encryption Standard (kurz: AES) oder der Data Encryption Standard (kurz: DES), verwendet, das den System-Code, der aus dem ersten System-Codeteil 215 und dem zweiten System-Codeteil 245 besteht, als Schlüssel verwendet. Die Objektkennzeichnung 420 umfasst in diesem Ausführungsbeispiel vorzugsweise den Produktnamen, die Produktionseinheit und/oder die Produktspezifikation oder die Angabe des genauen Inhalts des Produktes, welches mit dem Objekt-Code versehen werden soll. Das Ergebnis des Schrittes 425 ist eine verschlüsselte Objektkennzeichnung 430.

In Schritt 440 werden der verschlüsselte System-Code 415 aus Schritt 410 und die verschlüsselte Objektkennzeichnung 430 aus Schritt 425 durch die dritte Datenspeichereinrichtung 660 im Datenspeicher 120 gespeichert.

Der Objekt-Code 405 wird in dem in Fig. 1 gezeigten Schritt 125 durch die Objekt-Code-Anbringungseinrichtung 670 an dem Objekt, für welches der Objekt-Code 405 erzeugt wurde, angebracht. Das Objekt wurde dabei durch die Produktion mit der entsprechenden Produktionseinheitsnummer hergestellt und mit der entsprechenden Objektkennzeichnung 420 versehen. Der Objekt-Code 405 wird dabei so an dem Objekt angebracht, dass er beispielsweise von einem Verbraucher ablesbar und somit anschließend überprüfbar ist.

In einem weiteren Ausführungsbeispiel wird der Objekt-Code in einen ersten und einen zweiten Objekt-Codeteil aufgeteilt. Die Teilung sowie die Zeichenlängen des ersten und des zweiten Objekt-Codeteiles sind dabei beliebig wählbar. In dem hier bevorzugten Ausführungsbeispiel entspricht der erste Objekt-Codeteil zwei Drittel und der zweite Objekt-Codeteil ein Drittel des Objekt-Codes 405. Bei Teilung des Objekt-Codes 405, wie im obigen Beispiel beschrieben, ist der erste Objekt-Codeteil "F37E4A1B" und der zweite Objekt-Codeteil "D8AU". Es ist für den Fachmann selbstverständlich, dass auch andere Teilungen, wie zum Beispiel ein Viertel und drei Viertel für die jeweiligen Objekt-Codeteile, möglich sind.

Für den Fachmann ist somit ersichtlich, dass die Sicherheit des Verfahrens dadurch erreicht wird, dass eine Entschlüsselung der Objektkennzeichnung 420 aus dem Datenspeicher 645 und die Zuordnung von Objekt-Code zu Objektkennzeichnung nur möglich ist, wenn die verwendeten Verschlüsselungsverfahren sowie die dafür verwendeten Schlüssel bekannt sind, welche jedoch nur als verschlüsselte Information in den Datenspeichern 625 und 645 vorliegen. Lediglich im Datenspeicher 635 sind unverschlüsselte Informationen bestehend aus dem Verschlüsselungsschlüssel 315, der Zuordnungskennung 330 und den zweiten objektspezifischen Daten 335 vorhanden, die aber für sich allein noch nicht genügen, die verschlüsselten Informationen in den Datenspeichern 625 oder 645 zu entschlüsseln oder eine Zuordnung von Objekt-Code zu Objektkennzeichnung herzustellen. Es ist somit auch bei Bekanntsein von Informationen aus einem der Datenspeicher 625, 635 oder 645 nicht möglich, alle verschlüsselten Informationen insbesondere nicht die Objektkennzeichnung und die Zuordnung von Objekt-Code zu Objektkennzeichnung wiederherzustellen.

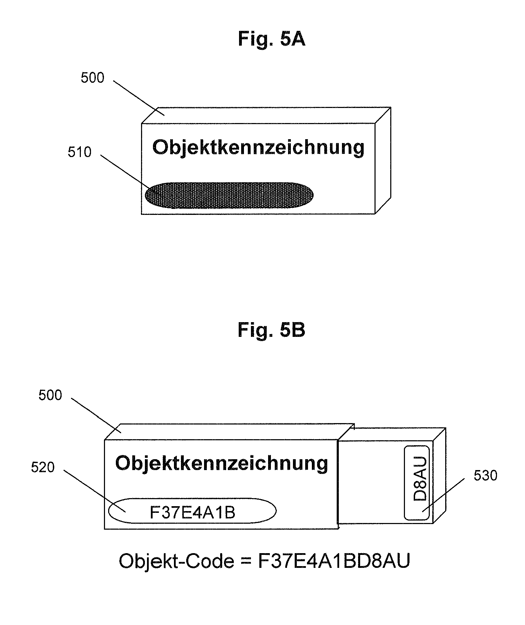

Mit Bezug zur Fig. 5A und Fig. 5B wird nun beschrieben, wie der Objekt-Code 405 an dem Objekt 500 angebracht ist. Der erste Objekt-Codeteil und der zweite Objekt-Codeteil, die gemäß dem oben beschriebenen Ausführungsbeispiel durch Teilung aus dem Objekt-Code 405 entstanden sind, werden in einem bevorzugten Ausführungsbeispiel an verschiedenen Positionen am Objekt 500 angebracht. Der erste Objekt-Codeteil 520 ist dabei von außen einsehbar an dem Objekt 500 selbst oder auf der Verpackung des Objektes, in der Fig. 5A nicht sichtbar angebracht. Der zweite Objekt-Codeteil 530 ist von außen nicht einsehbar auf dem Objekt 500, zum Beispiel auf der Innenseite der Verpackung des Objektes oder auf dem verpackten Produkt, angebracht. Der erste Objekt-Codeteil 520 ist in dem in Fig. 5A dargestelltem Ausführungsbeispiel unter einem Sichtschutz 510, wie zum Beispiel ein Rubbelfeld angebracht, wobei der Sichtschutz 510 zerstört werden muss, um den ersten Objekt-Codeteil 520 einzusehen. Des Weiteren ist gemäß Fig. 5B der zweite Objekt-Codeteil 530 einsehbar, wenn beispielsweise die Verpackung des Objektes geöffnet worden ist.

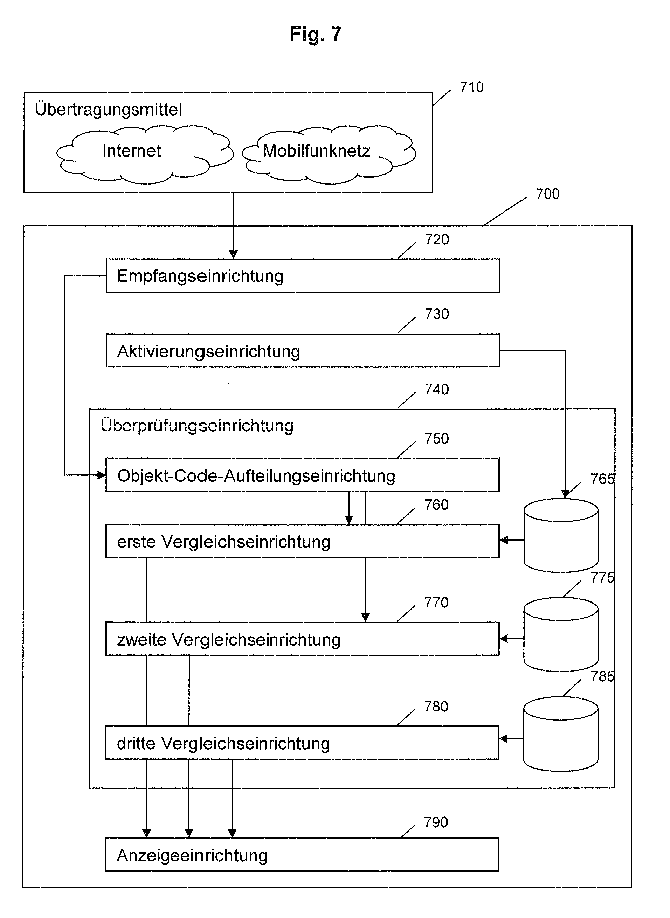

Eine Vorrichtung zum Überprüfen eines Objekt-Codes eines Objektes ist gemäß einem Ausführungsbeispiel in Fig. 7 dargestellt. Die Vorrichtung 700 umfasst eine Empfangseinrichtung 720, die den Objekt-Code des Objektes, der über ein Übertragungsmittel 710 übertragen wird, empfängt und an eine Überprüfungseinrichtung 740 überträgt, durch welche dieser Objekt-Code überprüft wird. Das Ergebnis der Überprüfung wird von einer Anzeigeeinrichtung 790 zur Anzeige gebracht. Die Überprüfungseinrichtung 740 umfasst eine Objekt-Code-Aufteilungseinrichtung 750, die den Objekt-Code aufteilt und an eine erste Vergleichseinrichtung 760 und eine zweite Vergleichseinrichtung 770 zur weiteren Verarbeitung übergibt. Die erste Vergleichseinrichtung 760 verarbeitet den übergebenen Teil des Objekt-Codes und vergleicht das Ergebnis dieser Verarbeitung mit Daten aus einem Datenspeicher 765, wobei die erste Vergleichseinrichtung 760 bei Auffinden eines mit dem verarbeiteten Teil des Objekt-Codes übereinstimmenden Eintrags im Datenspeicher 765 Daten aus dem Datenspeicher 765 ausliest, die dem übereinstimmenden Eintrag zugeordnet sind. Die ausgelesenen Daten werden durch die erste Vergleichseinrichtung 760 in der Überprüfungseinrichtung 740 zur weiteren Verarbeitung bereit gehalten. Die zweite Vergleichseinrichtung 770 vergleicht den übergebenen anderen Teil des Objekt-Codes mit Daten in einem Datenspeicher 775, und liest beim Auffinden eines übereinstimmenden Eintrages im Datenspeicher 775 diesem Eintrag zugeordnete Daten aus dem Datenspeicher 775 aus. Die ausgelesenen Daten werden durch die zweite Vergleichseinrichtung 770 weiter verarbeitet und in der Überprüfungseinrichtung 740 bereit gehalten. Eine dritte Vergleichseinrichtung 780 übernimmt die Daten, die in der Überprüfungseinrichtung 740 bereitgehalten werden, und verarbeitet diese Daten, wobei die verarbeiteten Daten mit Daten, die in einem Datenspeicher 785 gespeichert sind, verglichen werden. Bei Auffinden eines übereinstimmenden Eintrages im Datenspeicher 785 werden durch die dritte Vergleichseinrichtung 780 diesem Eintrag zugeordnete Daten ausgelesen und als Ergebnis der Überprüfung des Objekt-Codes an die Anzeigeeinrichtung 790 übergeben.

Der oder die Datenspeicher 765, 775 und 785 ist bzw. sind dabei in einem Ausführungsbeispiel mit dem oder den entsprechenden Datenspeicher 625, 645 und 665 aus Fig. 6 identisch. In einem anderen Ausführungsbeispiel, bei dem die Datenspeicher aus Fig. 7 und die Datenspeicher aus Fig. 6 nicht identisch sind, sind zumindest die Daten, die jeweils in den Datenspeichern 765, 775, 785 der Fig. 7 gespeichert sind, identisch mit den Daten, die in den entsprechenden Datenspeichern 625, 645 und 665 aus Fig. 6 gespeichert sind. Weiterhin umfasst die Vorrichtung 700 in einem Ausführungsbeispiel eine Aktivierungseinrichtung 730, die eine Aktivierungsinformation in den Datenspeicher 765 speichert.

Nachfolgend wird eine Ausführungsform des Verfahrens zur Überprüfung eines Objekt-Codes mit Bezug zu Fig. 1 beschrieben. In Fig. 1 sind die Datenspeicher 765, 775 und 785 vereinfachend als Datenspeicher 120 dargestellt. Der Objekt-Code, der mit dem oben beschriebenen Verfahren erzeugt wurde und der an einem Objekt angebracht ist, wird im Schritt 130 an das Übertragungsmittel 710 zur Überprüfung übergeben. Das Übertragungsmittel 710 überträgt den Objekt-Code an die Empfangseinrichtung 720. Die Empfangseinrichtung 720 übergibt den empfangenen Objekt-Code dann an die Überprüfungseinrichtung 740 übergibt. Das Übertragungsmittel 710 ist entweder das Internet oder ein Mobilfunknetz. In einem besonders bevorzugten Ausführungsbeispiel sind sowohl das Internet als auch das Mobilfunknetz als Übertragungsmittel 710 zur Übertragung des Objekt-Codes an die Überprüfungseinrichtung 740 alternativ verwendbar. Die Empfangseinrichtung 720 ist dabei vorzugsweise, wenn das Übertragungsmittel 710 das Internet ist, eine Webseite 560 und eine Kurznachricht 550, wie zum Beispiel der aus dem Stand der Technik bekannte Short Message Service (SMS), wenn das Übertragungsmittel 710 das Mobilfunknetz ist. Der von der Empfangseinrichtung 720 empfangene Objekt-Code wird danach zur Überprüfung in Schritt 135 an die Überprüfungseinrichtung 740 übergeben.

In Schritt 135 wird der Objekt-Code durch die Objekt-Code-Aufteilungseinrichtung 750 in zumindest einen ersten System-Codeteil und eine Zuordnungskennung aufgeteilt. In dem hier beschriebenen Beispiel, in dem der Objekt-Code aus 12 Zeichen besteht, wobei die ersten zehn Zeichen dem ersten System-Codeteil und die letzten beiden Zeichen der Zuordnungskennung entsprechen, wird der Objekt-Code in einen ersten System-Codeteil mit zehn Zeichen und eine Zuordnungskennung mit zwei Zeichen aufgeteilt. Der erste System-Codeteil wird weiter in der ersten Vergleichseinrichtung 760 durch das gewählte erste Verschlüsselungsverfahren, wie es oben beschrieben wurde, verschlüsselt. Nachfolgend wird dieser verschlüsselte erste System-Codeteil mit verschlüsselten ersten System-Codeteilen verglichen, die in dem Datenspeicher 120 gespeichert sind. Wenn ein gespeicherter verschlüsselter erster System-Codeteil im Datenspeicher 120 aufgefunden wird, der mit dem verschlüsselten ersten System-Codeteil des zu überprüfendes Objekt-Codes übereinstimmt, werden durch die erste Vergleichseinrichtung 760 die zugeordneten im Datenspeicher 120 gespeicherten Daten gelesen. Diese gespeicherten Daten umfassen im hier bevorzugten Ausführungsbeispiel einen verschlüsselten zweiten System-Codeteil und eine erste objektspezifische Information. Der verschlüsselte zweite System-Codeteil wird durch die erste Vergleichseinrichtung 760 durch Anwendung des zweiten Verschlüsselungsverfahrens, welches identisch mit dem oben gewählten symmetrischen Verschlüsselungsverfahren ist, und dem ersten System-Codeteil als Schlüssel zu einem zweiten System-Codeteil entschlüsselt. Ferner wird in einem Ausführungsbeispiel der erste System-Codeteil und der entschlüsselte zweite System-Codeteil zum einem System-Code zusammengefügt. Der erste und zweite System-Codeteil, die erste objektspezifische Information und, soweit gebildet, der System-Code werden in der Überprüfungseinrichtung 740 zur weiteren Verwendung in anderen Einrichtungen der Überprüfungseinrichtung 740 bereitgehalten. Zusätzlich werden in einem Ausführungsbeispiel die ausgelesenen Daten und/oder eine Nachricht, die kennzeichnet, dass eine Übereinstimmung im Datenspeicher 120 aufgefunden wurde, an die Anzeigeeinrichtung 790 zur Anzeige übergeben. Wird durch die erste Vergleichseinrichtung 760 im Datenspeicher 120 kein übereinstimmender verschlüsselter erster System-Codeteil aufgefunden, wird eine Fehlernachricht 145 an die Anzeigeeinrichtung 790 übergeben, die kennzeichnet, dass keine Übereinstimmung aufgefunden werden konnte. In diesem Fall wird das Verfahren beendet und die Anzeigeeinrichtung 790 zeigt die Fehlernachricht 145 an.

Für den Fall, dass durch die erste Vergleichseinrichtung 760 im Datenspeicher 120 ein übereinstimmender verschlüsselter erster System-Codeteil aufgefunden wurde, wird das Verfahren durch Übergabe der durch Aufteilung in der Objekt-Code-Aufteilungseinrichtung 750 erhaltenen Zuordnungskennung an die zweite Vergleichseinrichtung 770 fortgesetzt. Die zweite Vergleichseinrichtung 770 vergleicht die übergebene Zuordnungskennung mit Zuordnungskennungen, die in dem Datenspeicher 120 gespeichert sind. Für den Fall, dass eine übereinstimmende Zuordnungskennung im Datenspeicher 120 aufgefunden wird, werden durch die zweite Vergleichseinrichtung 770 die dieser Zuordnungskennung zugeordneten Daten, wie zum Beispiel ein Verschlüsselungsschlüssel und eine zweite objektspezifische Information ausgelesen, welche zur weiteren Verarbeitung in der Überprüfungseinrichtung 740 bereitgehalten werden. Die ausgelesenen Daten und/oder eine geeignete Nachricht, die angibt, dass Daten im Datenspeicher 120 aufgefunden wurden und zur weiteren Verarbeitung in der Überprüfungseinrichtung 740 bereitgestellt sind, werden an die Anzeigeeinrichtung 790 zur Anzeige übergeben. Für den Fall, dass im Datenspeicher 120 keine übereinstimmende Zuordnungskennung aufgefunden werden konnte, wird an die Anzeigeeinrichtung 790 eine entsprechende Fehlernachricht 145 gesendet, die kennzeichnet, dass die Zuordnungskennung nicht durch die zweite Vergleichseinrichtung 770 im Datenspeicher 120 aufgefunden wurde. In diesem Fall wird das Verfahren beendet und die Anzeigeeinrichtung 790 zeigt die Fehlernachricht 145 an.

Für den Fall, dass durch die zweite Vergleichseinrichtung 770 eine Übereinstimmung im Datenspeicher 120 aufgefunden wurde, wird das Verfahren durch die dritte Vergleichseinrichtung 780 fortgesetzt. Die dritte Vergleichseinrichtung 780 verschlüsselt durch Anwendung eines dritten Verschlüsselungsverfahrens den in der Überprüfungseinrichtung 740 bereitgehaltenen System-Code, der aus dem ersten und dem zweiten System-Codeteil gebildet ist, mit dem Verschlüsselungsschlüssel. Das dritte Verschlüsselungsverfahren ist dabei identisch mit dem oben beschriebenen dritten Verschlüsselungsverfahren. Der so verschlüsselte System-Code wird mit verschlüsselten System-Codes in dem Datenspeicher 120 verglichen. Wird dabei im Datenspeicher 120 ein übereinstimmender verschlüsselter System-Code aufgefunden, werden durch die dritte Vergleichseinrichtung 780 die diesem verschlüsselten System-Code zugeordneten Daten, wie zum Beispiel hier eine verschlüsselte Objektkennzeichnung, ausgelesen. Die verschlüsselte Objektkennzeichnung wird durch Anwendung des oben beschriebenen vierten Verschlüsselungsverfahrens durch die dritte Vergleichseinrichtung 780 mit dem in der Überprüfungseinrichtung 740 bereitgehaltenen System-Codes als Schlüssel entschlüsseln. Die entschlüsselte Objektkennzeichnung und/oder eine geeignete Nachricht, dass im Datenspeicher 120 ein übereinstimmender verschlüsselter System-Code aufgefunden wurde, wird an die Anzeigeeinrichtung 790 übertragen, um von der Anzeigeeinrichtung 790 angezeigt zu werden. Wird im Datenspeicher 120 keine Übereinstimmung aufgefunden, wird eine Fehlernachricht 145 an die Anzeigeeinrichtung 790 gesendet, die kennzeichnet, dass der System-Code nicht im Datenspeicher 120 aufgefunden wurde. In diesem Fall wird das Verfahren beendet und die Anzeigeeinrichtung 790 zeigt die Fehlernachricht 145 an.

Die Anzeigeeinrichtung 790 zeigt die von der ersten, zweiten und dritten Vergleichseinrichtung erhaltenen Daten und/oder Nachrichten an. Beispielsweise wird in einem bevorzugten Ausführungsbeispiel die Fehlernachricht 145 angezeigt, die angibt, dass der übergebene Objekt-Code nicht vorhanden ist, was auf eine fehlerhafte Eingabe des Objekt-Codes oder eine Fälschung des Objektes schliessen lässt. Für den Fall, dass der Objekt-Code aufgefunden wurde, d.h. das der erste System-Code im Datenspeicher 120, die Zuordnungskennung im Datenspeicher 120 und übereinstimmende Daten im Datenspeicher 120 aufgefunden wurden, wird die entschlüsselte Objektkennzeichnung 180 durch die Anzeigeeinrichtung 790 angezeigt.

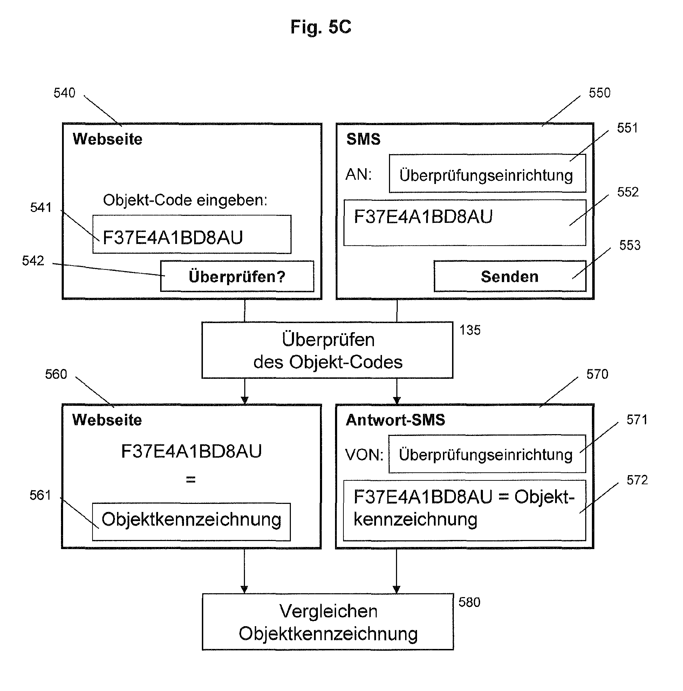

Nachfolgend wird anhand von Fig. 5A, 5B und 5C die Überprüfung eines Objekt-Codes unter Verwendung des oben beschriebenen Verfahrens durch einen Verbraucher beschrieben. Der Verbraucher erwirbt, beispielsweise bei einem Händler, ein Objekt 500, das mit einem Objekt-Code versehen ist, welcher mit einem Verfahren zur Kennzeichnung eines Objektes gemäß der vorliegenden Erfindung erzeugt wurde. Durch Zerstören des Sichtschutzes 510 wird der erste Objekt-Codeteil 520 "F37E4A1B" einsehbar. Der zweite Objekt-Codeteil 530 "D8AU" wird durch Öffnen der Verpackung des Objektes 500 einsehbar. Der Verbraucher fügt nun die beiden Objekt-Codeteile zum Objekt-Code "F37E4A1BD8AU" zusammen. Dieser Objekt-Code wird durch den Verbraucher an die Überprüfungseinrichtung 740 durch das Übertragungsmittel 710 übermittelt. In Fig. 5C ist eine Webseite 540 dargestellt, die als Empfangseinrichtung 720 fungiert, wenn das Übertragungsmittel 710 das Internet ist. Auf der Webseite 540 ist ein Eingabefeld 541 vorhanden, in welcher der Verbraucher den Objekt-Code eingibt. Die Übertragung des eingegeben Objekt-Codes an die Überprüfungseinrichtung 740 wird durch Betätigen des auf der Webseite 540 bereitgestellten Funktionsschalters 542 vorgenommen. Die Überprüfungseinrichtung 740 überprüft nachfolgend den übermittelten Objekt-Code in Schritt 135, wie oben beschrieben. Das Ergebnis des Schrittes 135 wird an die Anzeigeeinrichtung 790 übergeben. Die Anzeigeeinrichtung 790 zeigt, wenn das Übertragungsmittel 710 das Internet ist, das Ergebnis vorzugsweise als eine Webseite 560 an, in der die Objektkennzeichnung 561 für den überprüften Objekt-Code angezeigt wird. Weiterhin kann die Anzeigeeinrichtung 790 auch den eingegebenen Objekt-Code, beispielsweise zur Kontrolle, anzeigen. Wenn der Schritt 135 nicht erfolgreich ausgeführt wird, dann zeigt die Anzeigeeinrichtung 790 auf der Webseite 560 die Fehlernachricht 145 an, die angibt, dass der Objekt-Code nicht gefunden wurde. Der Verbraucher vergleicht nun in einem Schritt 580 ob die übermittelte Objektkennzeichnung 561 mit der Objektkennzeichnung auf dem Objekt 500 übereinstimmt. Falls diese beiden Objektkennzeichnungen gleich sind, ist das Objekt laut Verfahren authentisch.

Gemäß einem weiteren Ausführungsbeispiel, das nun mit Bezug auf Fig. 5C beschrieben wird, gibt der Verbraucher den Objekt-Code des Objektes 500 in eine SMS-Kurznachricht 550 ein, wenn das Mobilfunknetz als Übertragungsmittel 710 verwendet wird. Die SMS-Kurznachricht 550 enthält die Nummer 551 der Überprüfungseinrichtung, sowie als Nachrichtentext 552 den zu überprüfenden Objekt-Code. Die SMS-Kurznachricht 550 wird durch Betätigen des "Senden"-Knopfes 553 auf dem Gerät des Verbrauchers wie zum Beispiel ein Mobiltelefon, welches das Mobilfunknetz benutzt, an die Überprüfungseinrichtung 740 übermittelt. Die Überprüfungseinrichtung 740 überprüft den Objekt-Code durch Ausführung des Schrittes 135. Das Ergebnis der Überprüfung wird durch eine Antwort-SMS 570 über das Mobilfunknetz an das Gerät des Verbrauchers gesendet. Die Antwort-SMS enthält bei erfolgreicher Überprüfung als Antworttext 572 beispielsweise den Objekt-Code zur Kontrolle und die Objektkennzeichnung. Bei nicht erfolgreicher Überprüfung enthält der Antworttext 572 die Nachricht 145. Der Verbraucher vergleicht nun in einem Schritt 580 ob die übermittelte Objektkennzeichnung im Antworttext 572 mit der Objektkennzeichnung auf dem Objekt 500. Falls diese beiden Objektkennzeichnungen gleich sind, ist das Objekt laut dem Verfahren authentisch.

Gemäß einem bevorzugten Ausführungsbeispiel zeigt die Anzeigeeinrichtung 790 die Objektkennzeichnung, wenn das Übertragungsmittel das Internet ist, als eine Webseite 580 und, wenn das Übertragungsmittel ein Mobilfunknetz ist, als eine Antwort-Kurznachricht 570, jeweils wie in Fig. 5C dargestellt, an. Die angezeigte Objektkennzeichnung kann nun mit der auf dem Objekt angebrachten Objektkennzeichnung verglichen werden, um die Authentizität des Objektes festzustellen. Das Objekt ist dann authentifiziert, wenn die angezeigte Objektkennzeichnung und die angebrachte Objektkennzeichnung identisch sind.

In einem bevorzugten Ausführungsbeispiel des Verfahrens gemäß Fig. 1 ist der System-Code im Datenspeicher 120 mit einer Aktivierungsinformation versehen, die angibt, ob der Objekt-Code aktiviert ist. Nach der Überprüfung des Objekt-Codes in Schritt 135 wird zusätzlich in Schritt 160 überprüft, ob der überprüfte Objekt-Code auch freigeschalten ist. Die Abfrage eines deaktivierten Objekt-Codes führt dabei zu einer entsprechenden Nachricht 165 in der Anzeigeeinrichtung 790. Wird bei der Überprüfung in Schritt 160 festgestellt, dass der Objekt-Code freigeschaltet ist, wird dieser zur Anzeige 150 an die Anzeigeeinrichtung 790 übertragen.

Der Objekt-Code wird vorzugsweise standardmäßig bei Erzeugung des ersten System-Codeteiles in Schritt 110, und damit auch der System-Code sowie der Objekt-Code, auf deaktiviert gesetzt. Der System-Code wird durch einen Schritt 155, welcher vor einer Überprüfung in Schritt 135 auszuführen ist, aktiviert. Dabei wird der Objekt-Code durch Eingabe des ersten System-Codeteils in die Aktivierungseinrichtung 730 dann aktiviert, wenn im Datenspeicher 765 ein übereinstimmender erster System-Codeteil aufgefunden wird, welcher noch nicht aktiviert ist. Für den Fall, dass ein übereinstimmender nicht-aktivierter erster System-Codeteil aufgefunden wird, wird die Aktivierungsinformation für den ersten System-Codeteil aktiviert und der Objekt-Code ist somit für eine Überprüfung freigeschaltet. Weiterhin wird eine geeignete Nachricht, dass der Objekt-Code aktiviert wurde, an die Anzeigeeinrichtung 790 gesendet. Andernfalls wird eine entsprechende Nachricht durch die Anzeigeeinrichtung 790 angezeigt, die kennzeichnet, dass der eingegebene erste System-Codeteil nicht im Datenspeicher 765 vorhanden ist oder dass der eingegebene erste System-Codeteil zwar im Datenspeicher 765 aufgefunden wurde, aber bereits aktiviert ist.

In weiteren Ausführungsbeispielen des Verfahrens gemäß Fig. 1 werden abfragespezifische Daten in einem weiteren Datenspeicher, der nicht dargestellt ist, abgelegt. Diese abfragespezifischen Daten umfassen bei Übertragung des Objekt-Codes über das Internet vorzugsweise eine Zeitangabe, wann der Objekt-Code übermittelt wurde, die IP-Adresse, die den Ursprung der Übermittlung angibt, den Internet-Dienstanbieter und die Anzahl an Eingabeversuchen. Bei Nutzung eines Mobilfunknetzes als Übertragungseinrichtung 710 umfassen die abfragespezifischen Daten vorzugsweise eine Zeitangabe, die Handynummer des Abfragenden und die SMS-Wahlnummer. Die SMS-Wahlnummer ist beispielsweise eine sogenannte SMS-Kurzwahlnummer. Bei einigen Mobilfunknetzen kann die SMS-Wahlnummer aber auch eine entsprechende SMS-Langwahlnummer sein. Weitere Formate von SMS-Wahlnummer sind abhängig vom Mobilfunknetz möglich. Es ist für den Fachmann selbstverständlich, dass weitere abfragespezifische Daten speicherbar sind und dass der genannte weitere Datenspeicher auch mit den oben beschriebenen Datenspeichern identisch ist.

Weitere bevorzugte Ausführungsbeispiele der vorliegenden Erfindung umfassen bei Überprüfung eines übertragenen Objekt-Codes eine Abfrage der abfragespezifischen Daten, um festzustellen, ob der Objekt-Code bereits abgefragt wurde. In diesen Ausführungsbeispielen wird bei erstmaliger Abfrage des Objekt-Codes zusätzlich eine Abfragekennung und ein Abfragekennwort erzeugt und als abfragespezifische Daten in einem Abfrage-Datenspeicher, der nicht dargestellt ist, gespeichert. Die Abfragekennung und das Abfragekennwort werden beispielsweise dem Verbraucher über die Anzeigeeinrichtung 790 angezeigt, der einen bestimmten Objekt-Code erstmalig überprüft, d.h. der Objekt-Code wurde vorher noch nicht abgefragt oder überprüft. Bei weiteren Abfrageversuchen dieses Objekt-Codes, welcher bereits einmal abgefragt wurde, wird zusätzlich die Abfragekennung und das Abfragekennwort durch den Verbraucher übermittelt, um zu gewährleisten, dass einzig und allein der Verbraucher, der den Objekt-Code erstmalig abgefragt hat, weitere erfolgreiche Abfragen für diesen Objekt-Code durchführen kann. Andere Verbraucher, die nicht über die entsprechende Abfragekennung und das Abfragekennwort für diesen Objekt-Code verfügen, können entweder den Objekt-Code nicht erfolgreich abfragen oder erhalten eine entsprechende Nachricht, dass der Objekt-Code bereits erstmalig überprüft wurde.

Das erfindungsgemäße Verfahren wird bevorzugt als Computerprogramm auf einem Computer ausgeführt und steuert diesen. Der Computer umfasst dabei beliebige DV-Einrichtungen einschließlich Einzelplatz-PC's, Client-Server-Architekturen oder andere vernetzte Computersysteme, soweit sie entsprechend eingerichtet und zur Ausführung des Verfahrens geeignet sind.

## Patentansprüche

1. Verfahren zum Kennzeichnen eines Objektes (500), welches zumindest mit einer Objektkennzeichnung (420) versehen ist, mittels eines Objekt-Codes (405), der zur Überprüfung der Authentizität des Objektes (500) verwendet wird, umfassend die Schritte:
a) Erzeugen (105) eines eindeutigen zufälligen System-Codes, der aus einem ersten und einem zweiten System-Codeteil (215, 245) besteht, wobei der erste System-Codeteil (215) aus einem ersten Zeichenvorrat (200) durch ein erstes Zufallsverfahren (205) und der zweite System-Codeteil (245) aus einem zweiten Zeichenvorrat (230) durch ein zweites Zufallsverfahren (235) erzeugt werden, und Speichern (265) des System-Codes zusammen mit mindestens einer ersten objektspezifischen Information (260) in einem ersten Datenspeicher (625), wobei der erste System-Codeteil (215) durch ein erstes Verschlüsselungsverfahren (220) und der zweite System-Codeteil (245) durch ein zweites Verschlüsselungsverfahren (250), welches den ersten System-Codeteil (215) als Schlüssel verwendet, vor dem Speichern verschlüsselt werden;
b) Erzeugen (110, 310) eines zufälligen Verschlüsselungsschlüssels (315) aus einem dritten Zeichenvorrat (300) durch ein drittes Zufallsverfahren (305), Erzeugen (325) einer eindeutigen Zuordnungskennung (330) durch ein Zuordnungsverfahren (320), und Speichern (340) des Verschlüsselungsschlüssels (315), der Zuordnungskennung (330) und zumindest einer zweiten objektspezifischen Information (335) in einem zweiten Datenspeicher (635);
c1) Erzeugen (115, 400) des Objekt-Codes (405), der zumindest aus dem ersten System-Codeteil (215) und der Zuordnungskennung (330) besteht;
c2) Verschlüsseln (410) des System-Codes durch ein drittes Verschlüsselungsverfahren, welches den Verschlüsselungsschlüssel (315) als Schlüssel verwendet, Verschlüsseln (425) der Objektkennzeichnung (420) durch ein viertes Verschlüsselungsverfahren, welches den System-Code als Schlüssel verwendet, und Speichern (435) des verschlüsselten System-Codes (415) zusammen mit der verschlüsselten Objektkennzeichnung (430) in einem dritten Datenspeicher (645);
d) Anbringen (125) des Objekt-Codes (405) an dem Objekt (500);
wobei das Verfahren einen vierten Datenspeicher bereitstellt, in welchem bei der Überprüfung der Authentizität des Objektes (500) erzeugte abfragespezifische Daten gespeichert werden,
wobei die Datenspeicher (625, 635, 645) physisch getrennt voneinander sind.

2. Verfahren nach Anspruch 1, wobei zu dem in Schritt a) gespeicherten System-Code zusätzlich eine Aktivierungsinformation im ersten Datenspeicher (625) gespeichert wird (155), die kennzeichnet, ob der System-Code aktiv oder nicht-aktiv ist, wobei der System-Code erst nach einer Aktivierung überprüfbar ist; und/oder wobei der Objekt-Code (405) in einen ersten und einen zweiten Objekt-Codeteil (520, 530) aufgeteilt wird.

3. Verfahren nach Anspruch 2, wobei der zweite Objekt-Codeteil (530) so an dem Objekt (500) angebracht ist, dass er von außen nicht einsehbar ist, und der erste Objekt-Codeteil (520) außen auf dem Objekt (500) angebracht ist; und wobei bevorzugt der erste Objekt-Codeteil (520) unter einem Sichtschutz (510) angebracht ist.

4. Verfahren zum Überprüfen der Authentizität eines Objektes (500), welches zumindest mit einer Objektkennzeichnung (420) versehen ist, mittels eines Objekt-Codes (405), wobei der Objekt-Code (405) gemäß einem der vorhergehenden Ansprüche erzeugt ist, umfassend die Schritte:
e) Übertragen des Objekt-Codes (405) über ein Übertragungsmittel, Empfangen des übertragenen Objekt-Codes (405) durch eine Überprüfungseinrichtung und Speichern von abfragespezifischen Daten in einem vierten Datenspeicher, die bei der Überprüfung der Authentizität des Objekt-Codes (405) erzeugt werden;
f) Aufteilen des Objekt-Codes (405) in zumindest einen ersten System-Codeteil (215) und eine Zuordnungskennung (330);
g) Verschlüsseln des ersten System-Codeteiles (215) mit einem ersten Verschlüsselungsverfahren, Vergleichen des verschlüsselten ersten System-Codeteiles (225) mit den ersten System-Codeteilen, die im ersten Datenspeicher (625) gespeichert sind, und, falls der verschlüsselte erste System-Codeteil (225) im ersten Datenspeicher (625) aufgefunden wird, Entschlüsseln eines im ersten Datenspeicher (625) gespeicherten zweiten System-Codeteiles (255) mit einem zweiten Verschlüsselungsverfahren, welches den ersten System-Codeteil (215) als Schlüssel verwendet, Zusammenfügen des ersten und des zweiten System-Codeteiles (215, 245) zu einem System-Code;
h) Vergleichen der Zuordnungskennung (330) mit Zuordnungskennungen, die im zweiten Datenspeicher (635) gespeichert sind, und, falls eine übereinstimmende Zuordnungskennung aufgefunden wird, Verschlüsseln des System-Codes durch ein drittes Verschlüsselungsverfahren, welches einen zusammen mit der Zuordnungskennung (330) im zweiten Datenspeicher (635) gespeicherten Verschlüsselungsschlüssel (315) als Schlüssel verwendet;
i) Vergleichen des verschlüsselten System-Codes (415) mit verschlüsselten System-Codes, die im dritten Datenspeicher (645) gespeichert sind, und, falls ein übereinstimmender verschlüsselter System-Code aufgefunden wird, Entschlüsseln einer zugeordneten verschlüsselten Objektkennzeichnung (430) durch ein viertes Verschlüsselungsverfahren, welches den System-Code als Schüssel verwendet; und
j) Anzeigen (150) einer entschlüsselten Objektkennzeichnung zum Vergleichen der angezeigten Objektkennzeichnung mit der Objektkennzeichnung (420) auf dem Objekt (500),
wobei die Datenspeicher (625, 635, 645) physisch getrennt voneinander sind.

5. Verfahren nach Anspruch 4, in dem der System-Code im ersten Datenspeicher (625) mit einer zusätzlichen Aktivierungsinformation gespeichert ist, die anzeigt, ob der System-Code aktiv oder nicht-aktiv ist, wobei das Verfahren einen weiteren Schritt, welcher vor dem Schritt e) ausgeführt wird, aufweist, in dem die Aktivierungsinformation von einem der System-Codes aktiviert wird (155); und/oder wobei das Übertragungsmittel das Internet oder ein Mobilfunknetz ist.

6. Verfahren nach einem der Ansprüche 4 oder 5, wobei die abfragespezifischen Daten bei Eingabe des Codes per Internet zumindest eine Zeitangabe, die IP-Adresse, den Internet-Dienstanbieter und die Anzahl an Eingabeversuchen umfassen; und/oder wobei die abfragespezifischen Daten bei Eingabe des Codes per SMS zumindest eine Zeitangabe, die Handynummer und die SMS-Wahlnummer umfassen.

7. Vorrichtung (600) zum Kennzeichnen eines Objektes (500), welches zumindest mit einer Objektkennzeichnung (420) versehen ist, mittels eines Objekt-Codes (405) der zur Überprüfung der Authentizität des Objektes (500) verwendet wird, umfassend:
eine System-Code-Erzeugungseinrichtung (610), die dazu ausgelegt ist, einen eindeutigen zufälligen System-Code zu erzeugen, der aus einem ersten und einem zweiten System-Codeteil (215, 245) besteht, wobei der erste System-Codeteil (215) aus einem ersten Zeichenvorrat (200) durch ein erstes Zufallsverfahren (205) und der zweite System-Codeteil (245) aus einem zweiten Zeichenvorrat (230) durch ein zweites Zufallsverfahren (235) erzeugt werden;
eine erste Datenspeichereinrichtung (620, 625), die dazu ausgelegt ist, den von der System-Code-Erzeugungseinrichtung (610) erzeugten System-Code zusammen mit mindestens einer ersten objektspezifischen Information (260) zu speichern, wobei der erste System-Codeteil (215) durch ein erstes Verschlüsselungsverfahren und der zweite System-Codeteil (245) durch ein zweites Verschlüsselungsverfahren, welches den ersten System-Codeteil (215) als Schlüssel verwendet, vor dem Speichern verschlüsselt werden;
eine Verschlüsselungsschlüssel-Erzeugungseinrichtung (630), die dazu ausgelegt ist, einen zufälligen Verschlüsselungsschlüssel (315) aus einem dritten Zeichenvorrat (300) durch ein drittes Zufallsverfahren (305) und eine eindeutige Zuordnungskennung (330) durch ein Zuordnungsverfahren (320) zu erzeugen;
eine zweite Datenspeichereinrichtung (640), die dazu ausgelegt ist, den erzeugten Verschlüsselungsschlüssel (315), die Zuordnungskennung (330) und zumindest eine zweite objektspezifische Information (335) zu speichern;
eine Objekt-Code-Erzeugungseinrichtung (650), die dazu ausgelegt ist, einen Objekt-Code (405) zu erzeugen, der zumindest aus dem ersten System-Codeteil (215) und der Zuordnungskennung (330) besteht;
eine dritte Datenspeichereinrichtung (660), die dazu ausgelegt ist, den durch ein drittes Verschlüsselungsverfahren, welches den Verschlüsselungsschlüssel (315) als Schlüssel verwendet, verschlüsselten System-Code (415) zusammen mit der Objektkennzeichnung (420) zu speichern, die durch ein viertes Verschlüsselungsverfahren, welches den System-Code als Schlüssel verwendet verschlüsselt ist;
eine Objekt-Code-Anbringungseinrichtung (670), die dazu ausgelegt ist, den Objekt-Code (405) an dem Objekt (500) anzubringen; und
eine vierte Datenspeichereinrichtung, die dazu ausgelegt ist, abfragespezifischen Daten, die bei der Überprüfung der Authentizität des Objektes (500) erzeugt werden, zu speichern,
wobei die Datenspeichereinrichtungen (620, 640, 660) physisch getrennt voneinander sind.

8. Vorrichtung (600) nach Anspruch 7, weiterhin umfassend:
eine Teilungseinrichtung, die dazu ausgelegt ist, den Objekt-Code (405) in einen ersten und einen zweiten Objekt-Codeteil (520, 530) zu teilen.

9. Vorrichtung (700) zum Überprüfen der Authentizität eines Objektes (500), welches zumindest mit einer Objektkennzeichnung (420) versehen ist, mittels eines Objekt-Codes (405), wobei der Objekt-Code (405) gemäß einer Vorrichtung nach einem der Ansprüche 7 oder 8 erzeugt wurde, umfassend:
eine Empfangseinrichtung (720), die dazu ausgelegt ist, den Objekt-Code (405) zu empfangen, der über mindestens ein Übertragungsmittel (710) übertragen wird;
eine Überprüfungseinrichtung (740), die dazu ausgelegt ist, den in die Eingabeeinrichtung eingegebenen Objekt-Code (405) zu entschlüsseln und die Entschlüsselung des eingegeben Objekt-Codes (405) zu ermöglichen, umfassend:
eine Objekt-Code-Aufteilungseinrichtung (750), die dazu ausgelegt ist, den eingegebenen Objekt-Code (405) zumindest in einen ersten System-Codeteil (215) und eine Zuordnungskennung (330) aufzuteilen;
eine erste Vergleichseinrichtung (760), die dazu ausgelegt ist, den ersten System-Codeteil (215) mit einem ersten Verschlüsselungsverfahren zu verschlüsseln und den verschlüsselten ersten System-Codeteil (225) mit den ersten System-Codeteilen, die in der ersten Datenspeichereinrichtung (620) gespeichert sind, zu vergleichen, und, falls der verschlüsselte erste System-Codeteil (225) in der ersten Datenspeichereinrichtung (620) aufgefunden wird, einen in der ersten Datenspeichereinrichtung (620) gespeicherten zweiten System-Codeteil (255) mit einem zweiten Verschlüsselungsverfahren, welches den ersten System-Codeteil (215) als Schlüssel verwendet, zu entschlüsseln und den ersten und den zweiten System-Codeteil (215, 245) zu einem System-Code zusammenzufügen;
eine zweite Vergleichseinrichtung (770), die dazu ausgelegt ist, die Zuordnungskennung (330) mit Zuordnungskennungen zu vergleichen, die in der zweiten Datenspeichereinrichtung (640) gespeichert sind, und, falls eine übereinstimmende Zuordnungskennung aufgefunden wird, den System-Code durch ein drittes Verschlüsselungsverfahren, welches einen zusammen mit der Zuordnungskennung (330) im zweiten Datenspeicher (635; 775) gespeicherten Verschlüsselungsschlüssel (315) als Schlüssel verwendet, zu verschlüsseln;
eine dritte Vergleichseinrichtung (780), die dazu ausgelegt ist, den verschlüsselten System-Code (415) mit verschlüsselten System-Codes zu vergleichen, die in der dritten Datenspeichereinrichtung (660) gespeichert sind, und, falls ein übereinstimmender verschlüsselter System-Code (415) aufgefunden wird, eine zugeordnete, verschlüsselte Objektkennzeichnung (430) durch ein viertes Verschlüsselungsverfahren, welches den ersten System-Codeteil (215) als Schlüssel verwendet, zu entschlüsseln;
eine Anzeigeeinrichtung (790), die die von der Überprüfungseinrichtung (740) entschlüsselte Objektkennzeichnung (420) anzeigt; und
eine vierte Datenspeichereinrichtung, die dazu ausgelegt ist, abfragespezifische Daten, die bei der Überprüfung der Authentizität des Objekt-Codes (405) erzeugt werden, zu speichern,
wobei die Datenspeichereinrichtungen (620, 640, 660) physisch getrennt voneinander sind.

10. Vorrichtung (700) nach Anspruch 9, weiterhin umfassend:
eine Aktivierungseinrichtung (730), die dazu ausgelegt ist, einen in der ersten Datenspeichereinrichtung (620) als nicht-aktiv gespeicherten System-Code zu aktivieren; und/oder wobei das Übertragungsmittel (710) das Internet oder ein Mobilfunknetz ist.

11. Vorrichtung (700) nach Anspruch 10, wobei die vierte Datenspeichereinrichtung bei Eingabe des Objekt-Codes (405) per Internet zumindest eine Zeitangabe, die IP-Adresse, den Internet-Dienstanbieter und die Anzahl an Eingabeversuchen speichert.

12. Vorrichtung (700) nach Anspruch 10, wobei die vierte Datenspeichereinrichtung bei Eingabe des Objekt-Codes (405) per SMS zumindest eine Zeitangabe, die Handynummer und die SMS-Wahlnummer speichert.

13. Objekt (500), das mit einem Objekt-Code (405) gekennzeichnet ist, der mit dem Verfahren gemäß einem der Ansprüche 1 bis 3 erzeugt wurde.

14. Computerprogramm, dass, wenn es auf einem Computer abläuft, diesen steuert, das Verfahren nach einem der Ansprüche 1 bis 6 auszuführen.

15. Datenträger, auf welchem ein Computerprogramm nach Anspruch 14 maschinenlesbar abgespeichert ist.

## Claims

1. Process for identifying an object (500), which has been provided with at least one object identification (420), by means of an object code (405) which is used for verifying the authenticity of the object (500), comprising the following steps:
a) generating (105) a unique random system code which consists of a first and a second system-code portion (215, 245), whereby the first system-code portion (215) is generated from a first character set (200) by a first random process (205) and the second system-code portion (245) is generated from a second character set (230) by a second random process (235), and storing (265) the system code together with at least one first item of object-specific information (260) in a first data memory (625), whereby the first system-code portion (215) is encrypted, prior to storage, by a first encryption process (220) and the second system-code portion (245) is encrypted, prior to storage, by a second encryption process (250) which uses the first system-code portion (215) as key;
b) generating (110, 310) a random encryption key (315) from a third character set (300) by a third random process (305), generating (325) a unique assignment identifier (330) by an assignment process (320), and storing (340) the encryption key (315), the assignment identifier (330) and at least one second item of object-specific information (335) in a second data memory (635);
c1) generating (115, 400) the object code (405) which consists of at least the first system-code portion (215) and the assignment identifier (330);
c2) encrypting (410) the system code by a third encryption process which uses the encryption key (315) as key, encrypting (425) the object identification (420) by a fourth encryption process which uses the system code as key, and storing (435) the encrypted system code (415) together with the encrypted object identification (430) in a third data memory (645);
d) applying (125) the object code (405) to the object (500);
wherein the process makes a fourth data memory available in which query-specific data generated in the course of the verification of the authenticity of the object (500) are stored,
wherein the data memories (625, 635, 645) have been physically separated from one another.

2. Process according to Claim 1, wherein in addition to the system code stored in step a) an item of activation information, which identifies whether the system code is active or inactive, is stored (155) in the first data memory (625), wherein the system code is verifiable only after an activation; and/or wherein the object code (405) is split into a first and a second object-code portion (520, 530).

3. Process according to Claim 2, wherein the second object-code portion (530) has been applied to the object (500) in such a way that it is not open to inspection from outside, and the first object-code portion (520) has been applied to the object (500) on the outside, and wherein the first object-code portion (520) has preferably been applied beneath a visibility screen (510).

4. Process for verifying the authenticity of an object (500), which has been provided with at least one object identification, by means of an object code (405), wherein the object code (405) has been generated in accordance with one of the preceding claims, comprising the following steps:
e) transmitting the object code (405) across a transmission medium, receiving the transmitted object code (405) by a verification device, and storing query-specific data, which are generated in the course of the verification of the authenticity of the object code (405), in a fourth data memory;
f) splitting the object code (405) into at least a first system-code portion (215) and an assignment identifier (330);
g) encrypting the first system-code portion (215) with a first encryption process, comparing the encrypted first system-code portion (225) with the first system-code portions that have been stored in the first data memory (625), and, if the encrypted first system-code portion (225) is discovered in the first data memory (625), decrypting a second system-code portion (255) stored in the first data memory (625) with a second encryption process which uses the first system-code portion (215) as key, joining the first and the second system-code portions (215, 245) together to form a system code;
h) comparing the assignment identifier (330) with assignment identifiers that have been stored in the second data memory (635), and, if a matching assignment identifier is discovered, encrypting the system code by a third encryption process which uses an encryption key (315), stored together with the assignment identifier (330) in the second data memory (635), as key;
i) comparing the encrypted system code (415) with encrypted system codes that have been stored in the third data memory (645), and, if a matching encrypted system code is discovered, decrypting an assigned encrypted object identifier (430) by a fourth encryption process which uses the system code as key; and
j) displaying (150) a decrypted object identifier for comparing the displayed object identifier with the object identifier (420) on the object,
wherein the data memories (625, 635, 645) have been physically separated from one another.

5. Process according to Claim 4, in which the system code has been stored in the first data memory (625) with an additional item of activation information which indicates whether the system code is active or inactive, wherein the process has a further step which is executed before step e), in which the item of activation information is activated (155) by one of the system codes; and/or wherein the transmission medium is the Internet or a mobile radio network.

6. Process according to one of Claims 4 or 5, wherein upon input of the code via the Internet the query-specific data comprise at least a time datum, the IP address, the Internet service provider and the number of input attempts; and/or wherein upon input of the code via SMS the query-specific data comprise at least a time datum, the mobile-phone number and the SMS dial number.

7. Apparatus (600) for identifying an object (500), which has been provided with at least one object identification (420), by means of an object code (405) which is used for verifying the authenticity of the object (500), comprising:
a system-code-generation device (610) which has been designed to generate a unique random system code which consists of a first and a second system-code portion (215, 245), whereby the first system-code portion (215) is generated from a first character set (200) by a first random process (205) and the second system-code portion (245) is generated from a second character set (230) by a second random process (235);
a first data-memory device (620, 625) which has been designed to store the system code, generated by the system-code-generation device (610), together with at least one first item of object-specific information (260), whereby the first system-code portion (215) is encrypted, prior to storage, by a first encryption process and the second system-code portion (245) is encrypted, prior to storage, by a second encryption process which uses the first system-code portion (215) as key;
an encryption-key-generation device (630) which has been designed to generate a random encryption key (315) from a third character set (300) by a third random process (305) and to generate a unique assignment identifier (330) by an assignment process (320);
a second data-memory device (640) which has been designed to store the generated encryption key (315), the assignment identifier (330) and at least one second item of object-specific information (335);
an object-code-generation device (650) which has been designed to generate an object code (405) which consists of at least the first system-code portion (215) and the assignment identifier (330);
a third data-memory device (660) which has been designed to store the system code (415), encrypted by a third encryption process which uses the encryption key (315) as key, together with the object identification (420) which has been encrypted by a fourth encryption process which uses the system code as key;
an object-code-application device (670) which has been designed to apply the object code (405) to the object (500); and
a fourth data-memory device which has been designed to store query-specific data that are generated in the course of the verification of the authenticity of the object (500),
wherein the data-memory devices (620, 640, 660) have been physically separated from one another.

8. Apparatus (600) according to Claim 7, further comprising:
a splitting device which has been designed to split the object code (405) into a first and a second object-code portion (520, 530).

9. Apparatus (700) for verifying the authenticity of an object (500), which has been provided with at least one object identification (420), by means of an object code (405), wherein the object code (405) was generated in accordance with an apparatus according to one of Claims 7 or 8, comprising:
a receiving device (720) which has been designed to receive the object code (405) which is transmitted across at least one transmission medium (710);
a verification device (740) which has been designed to decrypt the object code (405) input into the input device and to enable the decryption of the input object code (405), comprising:
an object-code-splitting device (750) which has been designed to split the input object code (405) at least into a first system-code portion (215) and an assignment identifier (330);
a first comparison device (760) which has been designed to encrypt the first system-code portion (215) with a first encryption process and to compare the encrypted first system-code portion (225) with the first system-code portions that have been stored in the first data-memory device (620), and, if the encrypted first system-code portion (225) is discovered in the first data-memory device (620), to decrypt a second system-code portion (255), stored in the first data-memory device (620), with a second encryption process which uses the first system-code portion (215) as key, and to join together the first and the second system-code portions (215, 245) to form a system code;
a second comparison device (770) which has been designed to compare the assignment identifier (330) with assignment identifiers that have been stored in the second data-memory device (640), and, if a matching assignment identifier is discovered, to encrypt the system code by a third encryption process which uses an encryption key (315), stored together with the assignment identifier (330) in the second data memory (635; 775), as key;
a third comparison device (780) which has been designed to compare the encrypted system code (415) with encrypted system codes that have been stored in the third data-memory device, and, if a matching encrypted system code (415) is discovered, to decrypt an assigned, encrypted object identification (430) by a fourth encryption process which uses the first system-code portion (215) as key;
a display device (790) which displays the object identification (420) decrypted by the verification device (740); and
a fourth data-memory device which has been designed to store query-specific data that are generated in the course of the verification of the authenticity of the object code (405),
wherein the data-memory devices (620, 640, 660) have been physically separated from one another.

10. Apparatus (700) according to Claim 9, further comprising:
an activation device (730) which has been designed to activate a system code stored in the first data-memory device as inactive; and/or wherein the transmission medium (710) is the Internet or a mobile radio network.

11. Apparatus (700) according to Claim 10, wherein upon input of the object code (405) via the Internet the fourth data-memory device stores at least a time datum, the IP address, the Internet service provider and the number of input attempts.

12. Apparatus (700) according to Claim 10, wherein upon input of the object code (405) via SMS the fourth data-memory device stores at least a time datum, the mobile-phone number and the SMS dial number.

13. Object (500) that has been identified by an object code (405) that was generated with the process according to one of Claims 1 to 3.

14. Computer program that, when it is running on a computer, controls the latter to execute the process according to one of Claims 1 to 6.

15. Data carrier on which a computer program according to Claim 14 has been stored in machine-readable form.

## Revendications

1. Procédé pour identifier un objet (500) qui est au moins doté d'une identification d'objet (420), à l'aide d'un code objet (405), qui est utilisé pour vérifier l'authenticité de l'objet (500), comprenant les étapes de :
a) production (105) d'un code système aléatoire clair qui se compose d'une première et d'une deuxième partie de code système (215, 245), la première partie de code système (215) étant produite à partir d'un premier jeu de caractères (200) par un premier processus aléatoire(205) et la deuxième partie de code système (245) étant produite à partir d'un deuxième jeu de caractères (230) par un deuxième processus aléatoire (235), et enregistrement (265) du code système conjointement avec au moins une première information spécifique à l'objet (260) dans une première mémoire de données (625), la première partie de code système (215) étant codifiée avant l'enregistrement par un premier processus de codification (220) et la deuxième partie de code système (245) par un deuxième processus de codification (250), lequel utilise comme clé la première partie de code système (215) ;
b) production (110, 310) d'une clé de codification aléatoire (315) à partir d'un troisième jeu de caractères (300) par un troisième processus aléatoire (305), production (325) d'un indice d'affectation clair (330) par un processus d'affectation (320), et enregistrement (340) de la clé de codification (315), de l'indice d'affectation (330) et au moins d'une deuxième information spécifique à l'objet (335) dans une deuxième mémoire de données (635) ;
c1) production (115, 400) du code objet (405), qui se compose au moins de la première partie de code système (215) et de l'indice d'affectation (330) ;
c2) codification (410) du code système par un troisième processus de codification, lequel utilise comme clé la clé de codification (315), codification (425) de l'identification d'objet (420) par un quatrième processus de codification, lequel utilise comme clé le code système, et enregistrement (435) du système code codifié (415) conjointement avec l'identification d'objet codifié (430) dans une troisième mémoire de données (645) ;
d) pose (125) du code objet (405) sur l'objet (500) ; le processus mettant à disposition une quatrième mémoire de données, dans lequel lors de la vérification de l'authenticité de l'objet (500) des données spécifiques à l'interrogation produites sont enregistrées,
les mémoires de données (625, 635, 645) étant physiquement séparées les unes des autres.

2. Procédé selon la revendication 1, dans lequel, en plus du code système enregistré à l'étape a), une information d'activation est enregistrée (155) dans la première mémoire de données (625), qui identifie si le code système est actif ou non actif, le code système pouvant être vérifié uniquement après une activation ; et / ou dans lequel le code objet (405) est réparti en une première et une deuxième partie de code objet (520, 530).

3. Procédé selon la revendication 2, dans lequel la deuxième partie de code objet (530) est agencée sur l'objet (500) de manière telle qu'elle n'est pas visible de l'extérieur, et la première partie de code objet (520) est agencée à l'extérieur sur l'objet (500) ; et dans lequel, de préférence la première partie de code objet (520) est agencée sous une protection visuelle (510).

4. Procédé de vérification de l'authenticité d'un objet (500), lequel est doté au moins d'une identification d'objet (420), à l'aide d'un code objet (405), le code objet (405) étant produit selon l'une des revendications précédentes, comprenant les étapes de :
e) transmission du code objet (405) par un moyen de transmission, réception du code objet transmis (405) par un dispositif de vérification et enregistrement des données spécifiques à l'interrogation dans une quatrième mémoire de données, lesquelles sont produites lors de la vérification de l'authenticité du code objet (405) ;
f) répartition du code objet (405) en au moins une première partie de code système (215) et un indice d'affectation (330) ;
g) codification de la première partie de code système (215) avec un premier processus de codification, comparaison de la première partie de code système codifiée (225) avec les premières parties de code système, qui sont enregistrées dans une première mémoire de données (625), et, si la première partie de code système codifiée (225) est trouvée dans une première mémoire de données (625), décodification d'une deuxième partie de code système (255) enregistrée dans une première mémoire de données (625) avec un deuxième processus de codification, lequel utilise comme clé la première partie de code système (215), jonction de la première et de la deuxième partie de code système (215, 245) en un code système ;
h) comparaison de l'indice d'affectation (330) avec des indices d'affectation qui sont enregistrés dans une deuxième mémoire de données (635), et, si un indice d'affectation concordant est trouvé, codification du code système par un troisième processus de codification, lequel utilise comme clé une clé de codification (315) enregistrée conjointement avec l'indice d'affectation (330) dans une deuxième mémoire de données (635) ;
i) comparaison du code système codifié (415) avec des codes système codifiés, qui sont enregistrés dans une troisième mémoire de données (645), et, si un code système codifié concordant est trouvé, décodification d'une identification d'objet codifiée affectée (430) par un quatrième processus de codification, lequel utilise comme clé le code système ; et
j) indication (150) d'une identification d'objet décodifiée pour comparer l'identification d'objet indiquée avec l'identification d'objet (420) sur l'objet (500),
les mémoires de données (625, 635, 645) étant physiquement séparées les unes des autres.

5. Procédé selon la revendication 4, dans lequel le code système est enregistré dans la première mémoire de données (625) avec une information d'activation supplémentaire, qui indique si le code système est actif ou non actif, dans lequel le procédé présente une autre étape, laquelle est réalisée avant l'étape e), dans lequel l'information d'activation est activée par un des codes système (155) ; et / ou dans lequel le moyen de transmission est Internet ou un réseau de service radiophonique mobile.

6. Procédé selon l'une des revendications 4 ou 5, dans lequel les données spécifiques à l'interrogation lors de l'entrée du code par Internet comprennent au moins une indication de temps, l'adresse IP, le fournisseur d'accès Internet et le nombre d'essais d'entrée ; et / ou dans lequel les données spécifiques à l'interrogation lors de l'entrée des codes par SMS comprennent au moins une indication de temps, le numéro de portable et le numéro d'appel SMS.

7. Dispositif (700) pour identifier un objet (500), lequel est doté au moins d'une identification d'objet (420), à l'aide d'un code objet (405), qui est utilisé pour vérifier l'authenticité de l'objet (500), comprenant :
un dispositif de production de code système (610), qui est conçu dans le but de produire un code système aléatoire clair qui se compose d'une première et d'une deuxième partie de code système (215, 245), la première partie de code système (215) étant produite à partir d'un premier jeu de caractères (200) par un premier processus aléatoire(205) et la deuxième partie de code système (245) étant produite à partir d'un deuxième jeu de caractères (230) par un deuxième processus aléatoire (235),
un premier dispositif d'enregistrement de données (620, 625), qui est conçu dans le but d'enregistrer le code système produit par le dispositif de production de code système (610) conjointement avec au moins une première information spécifique à l'objet (260), la première partie de code système (215) étant codifiée avant l'enregistrement par un premier processus de codification et la deuxième partie de code système (245) par un deuxième processus de codification, lequel utilise comme clé la première partie de code système (215) ;
un dispositif de production de clé de codification (630), qui est conçu dans le but de produire une clé de codification aléatoire (315) à partir d'un troisième jeu de caractères (300) par un troisième processus aléatoire (305) et un indice d'affectation clair (330) par un processus d'affectation (320) ;
un deuxième dispositif d'enregistrement de données (640), qui est conçu pour enregistrer la clé de codification produite (315), l'indice d'affectation (330) et au moins une deuxième information spécifique à l'objet (335) ;
un dispositif de production de code objet (650), qui est conçu dans le but de produire un code objet (405),
qui se compose au moins de la première partie de code système (215) et de l'indice d'affectation (330) ;
un troisième dispositif d'enregistrement de données (660), qui est conçu dans le but d'enregistrer le code système codifié (415) par un troisième processus de codification, lequel utilise comme clé la clé de codification (315), conjointement avec l'identification d'objet (420), qui est codifiée par un quatrième processus de codification, lequel utilise comme clé le code système ;
un dispositif de pose de code objet (670), qui est conçu dans le but de poser le code objet (405) sur l'objet (500) ; et
un quatrième dispositif d'enregistrement de données, qui est conçu dans le but d'enregistrer des données spécifiques d'interrogation, qui sont produites lors de la vérification de l'authenticité de l'objet (500), les dispositifs d'enregistrement des données (620, 640, 660) étant séparés physiquement les uns des autres.

8. Dispositif (600) selon la revendication 7, comprenant en outre :
un dispositif de division, qui est conçu dans le but de diviser le code objet (405) en une première et une deuxième partie de code objet (520, 530).

9. Dispositif (700) destiné à vérifier l'authenticité d'un objet (500), lequel est au moins doté d'une identification d'objet (420), à l'aide d'un code objet (405), le code objet (405) étant produit conformément à un dispositif selon l'une des revendications 7 ou 8, comprenant :
un dispositif de réception (720) qui est conçu dans le but de recevoir le code objet (405), qui est transmis par au moins un moyen de transmission (710) ;
un dispositif de vérification (740), qui est conçu dans le but de décoder un code objet entré dans le dispositif d'entrée (405) et de permettre la décodification du code objet entré (405), comprenant :
un dispositif de répartition du code objet (750), qui est conçu dans le but de répartir le code objet entré (405) au moins dans une première partie de code système (215) et un indice d'affectation (330) ;
un premier dispositif de comparaison (760), qui est conçu dans le but de codifier la première partie de code système (215) avec un premier processus de codification et de comparer la première partie de code système codifiée (225) avec les premières partie de code système, qui sont enregistrées dans le premier dispositif d'enregistrement de données (620), et, si la première partie de code système codifiée (225) est trouvée dans le premier dispositif d'enregistrement de données (620), de décoder une deuxième partie de code système (255) enregistrée dans le premier dispositif d'enregistrement de données (620) avec un deuxième processus de codification, lequel utilise comme clé la première partie de code système (215), et de joindre la première et la deuxième partie de code système (215, 245) à un code système ;
un deuxième dispositif de comparaison (770), qui est conçu dans le but de comparer l'indice d'affectation (330) avec des indices d'affectation, qui sont enregistrés dans le deuxième dispositif d'enregistrement de données (640), et, si un indice d'affectation concordant est trouvé, de codifier le code système par un troisième processus de codification, qui utilise comme clé une clé de codification (315) enregistrée conjointement avec l'indice d'affectation (330) dans la deuxième mémoire de données (635 ; 775) ;
un troisième dispositif de comparaison (780), qui est conçu dans le but de comparer le code système codifié (415) avec des codes système codifiés, qui sont enregistrés dans le troisième dispositif d'enregistrement de données (660), et, si un code système codifié concordant (415) est trouvé, de décodifier une identification d'objet codifiée affectée (430) par un quatrième processus de codification, lequel utilise comme clé la première partie de code système (215) ;
un dispositif d'indication (790), qui indique l'identification d'objet (420) décodée par le dispositif de vérification (740) ; et
un quatrième dispositif d'enregistrement de données, qui est conçu dans le but d'enregistrer des données spécifiques d'interrogation, qui sont produites lors de la vérification de l'authenticité du code objet (405),
les dispositifs d'enregistrement de données (620, 640, 660) étant séparés physiquement les uns des autres.

10. Dispositif (700) selon la revendication 9, comprenant en outre :
un dispositif d'activation (730), qui est conçu dans le but d'activer un code système enregistré comme non actif dans le premier dispositif d'enregistrement de données (620) ; et / ou dans lequel le moyen de transmission (710) est Internet ou un réseau de service radiophonique mobile.

11. Dispositif (700) selon la revendication 10, dans lequel le quatrième dispositif d'enregistrement de données enregistre lors de l'entrée du code objet (405) par Internet au moins une indication de temps, l'adresse IP, le fournisseur d'accès Internet et le nombre d'essais d'entrée.

12. Dispositif (700) selon la revendication 10, dans lequel le quatrième dispositif d'enregistrement de données enregistre lors de l'entrée du code objet (405) par SMS au moins une indication de temps, le numéro de portable et le numéro d'appel SMS.

13. Objet (500), qui est identifié avec un code objet (405), qui a été produit avec le procédé selon l'une des revendications 1 à 3.

14. Programme d'ordinateur qui, lorsqu'il fonctionne sur un ordinateur, commande à celui-ci d'exécuter le procédé selon l'une des revendications 1 à 6.

15. Support de données, sur lequel un programme d'ordinateur est mémorisé en étant lisible par une machine selon la revendication 14.
